# EUROPÄISCHE PATENTSCHRIFT

(11) **EP 3 326 804 B1**
(45) Veröffentlichungstag und Bekanntmachung des Hinweises auf die Patenterteilung: **07.11.2018**
(21) Anmeldenummer: 16200319.8
(22) Anmeldetag: 23.11.2016
(51) Int. Cl.: B32B 7/06, B32B 7/12, B32B 7/14, B65D 33/18

(54) **VERPACKUNGSFOLIE SOWIE VORRICHTUNG UND VERFAHREN ZUR HERSTELLUNG EINER SOLCHEN**
PACKAGING FILM AND DEVICE AND METHOD FOR MANUFACTURING SAME
FEUILLE D'EMBALLAGE AINSI QUE DISPOSITIF ET SON PROCÉDÉ DE FABRICATION

(43) Veröffentlichungstag der Anmeldung: 30.05.2018
(73) Patentinhaber: PETROPLAST GmbH Chemikalien und Kunststoffe, 41468 Neuss (DE)
(72) Erfinder: Gilka, Egbert, 40237 Düsseldorf (DE)
(74) Vertreter: Albrecht, Ralf

(56) Entgegenhaltungen:
- EP-A1- 1 783 059
- EP-A1- 2 551 211
- EP-A2- 0 827 912
- DE-A1- 4 315 067
- US-A- 5 078 509

## Beschreibung

Die Erfindung betrifft eine Verpackungsfolie, insbesondere zur Herstellung von Schlauchbeuteln, umfassend zwei ein- oder mehrschichtige Folienbahnen, die parallel zueinander ausgerichtet und derart angeordnet sind, dass ihre einander zugewandten inneren Randbereiche unter Bildung eines Überlappungsbereiches aufeinander liegen, wobei die beiden Folienbahnen in dem Überlappungsbereich lösbar miteinander verbunden sind.

Des Weiteren betrifft die Erfindung ein Verfahren zur Herstellung einer Verpackungsfolie, umfassend die Schritte
- zwei ein- oder mehrschichtige Folienbahnen werden auf zwei parallel zueinander angeordneten Folienvorratsrollen bereitgestellt,
- die Folienbahnen werden abgewickelt und mittels Führungsrollen derart geführt, dass sie in ihren einander zugewandten inneren Randbereichen unter Bildung eines Überlappungsbereiches aufeinandergelegt werden,
- die beiden Folienbahnen werden in dem Überlappungsbereich miteinander verbunden.

Schließlich betrifft die Erfindung eine Vorrichtung zur Herstellung einer Verpackungsfolie.

Aus dem Stand der Technik ist es bekannt, diverse Produkte mit Verpackungen aus Verpackungsfolien zu versehen. Bei derartigen Verpackungen, die insbesondere für Produkte aus dem Nahrungsmittelbereich zum Einsatz kommen, kann es sich beispielsweise um Schlauchbeutel oder dergleichen handeln.

Zum Verpacken von Produkten wird eine Verpackungsfolie, welche an wenigstens einer Seite eine Schicht aus siegelbarem Material aufweist, in einer geeigneten Verpackungsmaschine in Form einer auf eine Rolle aufgewickelten Bahn bereitgestellt. Mittels der Verpackungsmaschine wird die Verpackungsfolien-Bahn kontinuierlich abgewickelt, und die einzuhüllenden Produkte werden nacheinander jeweils auf einen Folien-Abschnitt geeigneter gelegt. Der Abschnitt wird zugeschnitten, die Verpackungsfolie wird um das Produkt herumgeschlagen und entlang einer sich in einer Längsrichtung der Verpackungsfolien-Bahn erstreckenden Längsnaht sowie entlang zweier sich orthogonal zu der Längsnaht erstreckenden Quernähte verschlossen. Dabei wird die Seite der Folie, welche die Schicht aus siegelbarem Material aufweist, zum Produkt hin orientiert. Diese bildet also die Innenseite der herzustellenden Verpackung. Das Verschließen erfolgt dann in der Regel, indem an den Verpackungsfolien im Bereich der aufeinanderliegenden siegelbaren Schichten an der Verpackungsinnenseite eine Siegelnaht in Längs- und zwei Siegelnähte in Querrichtung hergestellt werden.

Alternativ dazu, dass das Produkt auf die Verpackungsfolien-Bahn aufgelegt und diese in der vorgenannten Weise um das Produkt geschlagen wird, kann auch zunächst aus einem Verpackungsfolien-Bahn-Abschnitt geeigneter Größe ein an drei Seiten verschlossener Beutel hergestellt werden, indem entlang der Längs- und nur einer der Quernähte die Verpackungsfolie durch Siegeln verschlossen wird. Das Produkt kann dann in den noch offenen Beutel eingelegt und dieser abschließend entlang der zweiten Quernaht versiegelt werden. Diese Vorgehensweise eignet sich insbesondere, wenn eine Vielzahl kleiner Einzelprodukte, beispielsweise eine Vielzahl von Bonbons oder dergleichen in jeweils einem Beutel zu verpacken sind.

Derartige Verpackungen, insbesondere in Beutelform, haben sich vielfach bewährt. Die Produkte können auf einfache Weise unter Verwendung vergleichsweise wenig Verpackungsmaterial luftdicht eingehüllt und somit zuverlässig gegen äußere Einflüsse geschützt werden.

Um die aus einer Verpackungsfolie hergestellte Verpackung vorgenannter Art zu öffnen, muss ein Verbraucher diese jedoch vergleichsweise unkomfortabel aufreißen bzw. sie mit einer Schere aufschneiden, die nicht immer zur Hand ist. Dies wird teilweise als nachteilig empfunden.

Daher wurden die Verpackungsfolien dahingehend weiterentwickelt, dass diese nicht einteilig ausgebildet sind, sondern zwei ein- oder mehrschichtige Folienbahnen umfassen, die parallel zueinander ausgerichtet und derart angeordnet sind, dass ihre einander zugewandten inneren Randbereiche unter Bildung eines Überlappungsbereiches, in dem die Folienbahnen lösbar miteinander verbunden sind, aufeinanderliegen. An der fertigen Produktverpackung, die aus einer solchen weiterentwickelten Verpackungsfolie auf die zuvor beschriebene Weise hergestellt wird, dient der freie Endabschnitt des Überlappungsbereiches als Grifflasche für den Konsumenten. Diese kann der Benutzer bequem greifen, um die beiden Folienbahnabschnitte der Verpackung komfortabel auseinanderzuziehen, und an die beinhalteten Produkte zu gelangen.

Aus der US 5,078,509 geht ein Schlauchbeutel hervor, der eine Folienbahn umfasst, deren Endbereiche unter Bildung eines Überlappungsbereiches aufeinander liegen und in dem Überlappungsbereich durch eine Siegelnaht und einem Klebestreifen miteinander verbunden sind.

Die weiterentwickelten Verpackungsfolien der vorgenannten Art haben sich prinzipiell bewährt. Es besteht jedoch Bedarf daran, Verpackungsfolien bereitzustellen, aus denen Verpackungen für Produkte hergestellt werden können, die sich komfortabler öffnen und darüber hinaus zuverlässig wiederverschließen lassen können. Insbesondere im Bereich der Lebensmittelprodukte möchte der Konsument, wenn er den Inhalt einer Verpackung nach dem ersten Öffnen nicht vollständig verzehrt, die Verpackung auf einfache Weise wieder möglichst dicht verschließen können, um den verbleibenden Inhalt zu schützen. Gleichzeitig besteht Bedarf an Verpackungen, in denen Lebensmittel, insbesondere auch empfindliche Lebensmittel, möglichst lange haltbar sind, wofür die Verpackungen vor dem ersten Öffnen möglichst dicht sein müssen.

Ausgehend von dem vorgenannten Stand der Technik ist es daher Aufgabe der vorliegenden Erfindung, eine Verpackungsfolie bereitzustellen, aus welcher Verpackungen, insbesondere Schlauchbeutel gefertigt werden können, die sich durch eine besonders komfortabel herzustellende sowie nach dem ersten Öffnen zuverlässig wieder zu verschließende Öffnung sowie eine besonders hohe Dichtheit vor dem ersten Öffnen auszeichnen. Darüber hinaus ist es eine Aufgabe der vorliegenden Erfindung, eine Vorrichtung sowie ein Verfahren zur Herstellung einer derartigen Verpackungsfolie anzugeben.

Die vorgenannte Aufgabe wird bei einer Verpackungsfolie der eingangs genannten Art dadurch gelöst, dass die beiden Folienbahnen durch einen insbesondere durch Aufsprühen hergestellten Klebestreifen aus einem Hotmelt und eine Siegelnaht miteinander verbunden sind, die sich in dem Überlappungsbereich parallel zueinander in einer Längsrichtung der Folienbahnen erstrecken und nebeneinanderliegend angeordnet sind.

Es hat sich gezeigt, dass über das erfindungsgemäße Vorsehen sowohl eines Klebestreifens als auch einer benachbarten, parallel orientierten Siegelnaht in dem Überlappungsbereich eine Verpackungsfolie erhalten wird, aus der Verpackungen herstellbar sind, bei denen die Vorteile einer besonders hohen Dichtheit vor dem ersten Öffnen, eines besonders komfortablen Öffnungsvorganges sowie einer ebenfalls besonders komfortablen und zuverlässigen Wiederverschließbarkeit der Verpackung in Kombination vorliegen. Da die Verbindung der beiden Folienbahnen in dem Überlappungsbereich infolge der Siegelnaht von besonders hoher Dichtheit ist, eignet sich die erfindungsgemäße Verpackungsfolie insbesondere für Lebensmittel, vor allem auch besonders empfindliche Lebensmittel, die zur Gewährleistung eines für die Kunden zufriedenstellend langen Mindesthaltbarkeitsdatum besonders luftdicht zu verpacken sind.

Der Überlappungsbereich wird bei der erfindungsgemäßen Verpackungsfolie gebildet, indem die beiden parallel verlaufenden Folienbahnen in an sich bekannter Weise versetzt zueinander angeordnet sind und teilweise, nämlich an ihren inneren Randbereichen, überlappen.

In dem Überlappungsbereich ist zwischen den beiden Folienbahnen der Klebestreifen aus einem Hotmelt-Material vorgesehen und es erstreckt sich die Siegelnaht, bei der es sich um eine längliche Fügestelle der beiden überlappenden Folienbahnen handelt, ebenfalls in dem Überlappungsbereich und parallel zu dem Klebestreifen. Die beiden Streifen erstrecken sich in Längsrichtung der Folienbahnen, wobei zu beachten ist, dass diese nicht mit der Längsrichtung einer aus der erfindungsgemäßen Verpackungsfolie hergestellten Verpackung zusammenfallen muss. Vielmehr kann die Verpackung auch quer zur Längsrichtung der Folienbahnen eine größere Ausdehnung aufweisen als in Längsrichtung der Folienbahnen.

Bei dem Klebestreifen handelt es sich um einen streifenförmigen Auftrag eines Klebematerials. Zur Herstellung des Klebestreifens wird ein Hotmelt-Kleber, der auch als Schmelzklebstoff bezeichnet wird, verwendet. Dieser wird auf eine der beiden Folienbahnen in dem inneren Randbereich aufgebracht, insbesondere aufgesprüht. Zweckmäßiger Weise erfolgt die Aufbringung von oben auf die untere der beiden Folienbahnen. Anschließend werden die beiden Folienbahnen bevorzugt verpresst.

Bei der erfindungsgemäß vorgesehen Siegelnaht handelt es sich um eine längliche Füge- bzw. Verbindungsstelle der beiden Folienbahnen, die insbesondere durch lokale Erwärmung zum lokalen Weichmachen bzw. Anschmelzen und bevorzugt anschließendes Verpressen der beiden Folienbahnen erhalten wurde. Die Siegelnaht ist bevorzugt peelbar. Darunter ist zu verstehen, dass die im Bereich der Siegelnaht zwischen den beiden Folienbahnen bestehende Verbindung lösbar ist, insbesondere eine Folienbahn von der anderen Folienbahn abziehbar ist, ohne dass die Folienbahnen zerstört werden.

Die Siegelverbindung wird zweckmäßiger Weise hergestellt, nachdem der Klebestreifen aufgebracht und die beiden Folienbahnen anschließend aufeinander gelegt wurden, da Siegelnaht zweckmäßiger Weise herzustellen ist, während die beiden Folienbahnen aufeinander liegen.

Die Kombination aus einer Siegelnaht und einem benachbarten Klebstreifen in dem Überlappungsbereich hat sich als besonders geeignet erwiesen, um eine Verpackung mit einer leicht zu öffnenden sowie leicht wieder zu verschließenden Öffnung bereitzustellen. Dabei gewährleistet die Siegelnaht, dass die herzustellende Verpackung in dem Bereich, in dem später von einem Konsumenten durch Aufreißen die Öffnung hergestellt wird, bis zu dem ersten Öffnen besonders zuverlässig, insbesondere besonders luftdicht verschlossen ist. So ist sichergestellt, dass auch luftempfindliche Produkte, insbesondere Lebensmittel lange frisch gehalten und ausreichen lange Mindesthaltbarkeitsspannen erzielt werden können. Vor allem wird es möglich, auch für den Export bestimmte Produkte, welche sich mitunter durch ein mehrere Monate langes Mindesthaltbarkeitsdatum auszeichnen müssen, mit einer aus der erfindungsgemäßen Verpackungsfolie hergestellten Verpackung zu versehen.

Der sich neben der Siegelnaht erstreckende Klebestreifen aus einem Hotmelt-Material sorgt dafür, dass die einmal in der Verpackung hergestellte Öffnung zum Schutz derjenigen Produkte bzw. Produktteile, die nicht unmittelbar nach dem ersten Öffnen entnommen oder in die Verpackung zurückgelegt werden, auf komfortable Weise wieder verschlossen werden kann.

Um ein Produkt aus einer Verpackung aus der erfindungsgemäßen Verpackungsfolie zu entnehmen greift der Konsument das freie Ende des Überlappungsbereichs, also die Grifflasche, und zieht die obere Folienbahn von der unteren ab. Hierdurch wird die im Bereich des Klebestreifens bestehende Klebeverbindung gelöst und die im Bereich der Siegelnaht bestehende Siegelung wird durchbrochen. Nach der Produktentnahme kann der Konsument die Verpackung auf komfortable Weise wiederverschließen, indem er die obere Folienbahn in dem Überlappungsbereich einfach auf die untere Folienbahn drückt, wodurch diese wieder in Kontakt mit dem dort befindlichen Klebestreifen kommt.

Prinzipiell sind verschiedene Folienmaterialien geeignet, um für die Herstellung der erfindungsgemäßen Verpackungsfolie als Folienbahn zum Einsatz zu kommen. Als Beispiel sei eine Polyolefin-Mehrschichtfolie genannt. Kommen mehrschichtige Folienbahnen zum Einsatz, können diese an beiden Seiten Schichten aus identischen oder auch unterschiedlichen Materialien aufweisen. Rein Beispielhaft sei eine mehrschichtige Folie genannt, bei der an der einen Außenseite eine Schicht aus PP, also Polypropylen, und an der anderen Außenseite eine Schicht aus PE, also Polyethylen, liegt. Eine mehrschichtige Folienbahn kann auch eine insbesondere innenliegende Barriereschicht umfassen, was insbesondere für den Lebensmittelbereich zweckmäßig ist, in dem es auf eine hohe Dichtheit von Verpackungen ankommt. Auch können im Rahmen der vorliegenden Erfindung mehrschichtige Folienbahnen zum Einsatz kommen, die eine oder mehrere Schichten aus Papier aufweisen.

Die Folienbahnen sind - bei unterschiedlichen (Außen)seiten - bevorzugt derart orientiert, dass bei der erfindungsgemäßen Verpackungsfolie die Schichten gleichen Materials zur gleichen Seite liegen, was für die spätere Herstellung einer Verpackung aus der Verpackungsfolie besonders günstig ist. In dem Überlappungsbereich liegen dann die Schicht des einen und die Schicht des anderen Materials aufeinander, beispielsweise PP auf PE.

Kommen mehrschichtige Folienbahnen zum Einsatz, die sich an ihren beiden (Außen)Seiten durch Schichten aus unterschiedlichen Materialien auszeichnen, werden diese zweckmäßiger Weise derart gewählt, dass die unterschiedlichen Materialien miteinander siegelbar sind. Man spricht auch davon, dass sie A/B-siegelbar sind, insbesondere eine peelbare A/B-Siegelnaht herstellbar ist. Bei Folienbahnen, die an ihrer einen Seite eine Schicht aus Polypropylen, also PP und an ihrer anderen Seite eine Schicht aus Polyethylen, also PE aufweisen, hat es sich als besonders geeignet erwiesen, wenn es sich bei der Schicht aus PE um eine Metallocen-Polyethylen-Schicht handelt. Dann kann eine peelfähige A/B-Siegelnaht unter Aufbringung von Wärme oder Ultraschall und Druck hergestellt werden, insbesondere, wenn in dem Überlappungsbereich die PP- und die PE-Schicht aufeinanderliegen.

Nachdem zur Herstellung einer Produktverpackung ein Abschnitt der erfindungsgemäßen Verpackungsfolie zu einer Beutelform gefaltet wurde, liegen die siegelbaren Schichten der beiden Folienbahnen innenseitig aufeinander und es können in an sich bekannter Weise drei Siegelnähte, insbesondere zwei Quer- und eine Längssiegelnaht, an den Außenkanten des Beutels hergestellt werden, um einen umseitig verschlossenen Folienbeutel aus der erfindungsgemäßen Verpackungsfolie zu erhalten.

Eine Ausführungsform der erfindungsgemäßen Verpackungsfolie zeichnet sich dadurch aus, dass es sich bei der Siegelnaht um eine durch Aufbringung von Wärme und Druck auf die Folienbahnen hergestellte Siegelnaht, insbesondere um eine durch nacheinander erfolgte Aufbringung von zunächst Wärme und dann Druck auf die Folienbahnen hergestellte Siegelnaht handelt. Diese Vorgehensweise wird auch als Heißsiegeln bezeichnet. Besonders bevorzugt ist die Siegelnaht durch nacheinander erfolgte Aufbringung von zunächst Wärme und dann Druck auf die Folienbahnen sowie anschließende Kühlung der Folienbahnen hergestellt.

Auch kann es sich bei der Siegelnaht um eine durch Aufbringung von Ultraschallwellen und Druck auf die Folienbahnen hergestellte Siegelnaht, insbesondere um eine durch gleichzeitige Aufbringung von Ultraschallwellen und Druck auf die Folienbahnen hergestellte Siegelnaht handeln. Wird die Siegelnaht unter Anwendung von Ultrastrahlwellen hergestellt, was auch als Ultraschallsiegeln bezeichnet wird, ist es möglich, auf eine anschließende Kühlung zu verzichten. Einrichtungen zur Herstellung von Siegelnähten mittels Ultraschall zeichnen sich ferner in der Regel durch eine besonders kompakte Bauweise aus. Sie können eine drehbar gelagerte, rollenförmige Ultraschallsonde und eine ebenfalls drehbar gelagerten, für die Aufbringung des Drucks sorgende Pressrolle umfassen bzw. durch diese gebildet werden, wobei dann bevorzugt der Überlappungsbereich der beiden Folienbahnen durch einen zwischen der Sonde und der Pressrolle gebildeten Pressspalt geführt und gleichzeitig lokal sowohl Ultrastrahlwellen als auch Druck aufgebracht wird, um die Siegelnaht in dem Überlappungsbereich herzustellen.

Weiterhin kann vorgesehen sein, dass die Siegelnaht von einer benachbarten Randkante einer Folienbahn einen Abstand von maximal 0,2 mm aufweist, sich bevorzugt bis zu einer benachbarten Randkante einer Folienbahn erstreckt, also keinen Abstand bzw. einen Abstand von 0 mm zu einer benachbarten Randkante einer Folienbahn aufweist. Diese Maximalabstände der Siegelnaht von der zu dieser benachbarten Randkante, bei der es sich im zuvor beschriebenen Sinne zweckmäßiger Weise um die Randkante der zur Verpackungsinnenseite gewandten Folienbahn handelt, haben sich als besonders geeignet erwiesen, um Verpackungen hoher Dichtheit aus der erfindungsgemäßen Verpackungsfolie herstellen zu können. Besonders bevorzugt wird die Siegelnaht derart positioniert, dass sie sich bis zu der benachbarten Randkante einer Folienbahn erstreckt, da dann aus der erfindungsgemäßen Verpackungsfolie Verpackungen hergestellt werden können, die sich vor dem ersten Öffnen durch eine besonders hohe Dichtheit im Bereich der herzustellenden Öffnung auszeichnen.

Eine weitere Ausführungsform der erfindungsgemäßen Verpackungsfolie zeichnet sich ferner dadurch aus, dass der Klebestreifen von einer benachbarten Randkante einer Folienbahn einen Abstand von 1 cm bis 4 cm, insbesondere von 1,5 cm bis 3 cm, bevorzugt von 1,8 cm bis 2,2 cm aufweist. Die zu dem Klebestreifen benachbarte Randkante ist zweckmäßigerweise diejenige, welche an einer aus der Verpackungsfolie hergestellten Produktverpackung nach außen weist, also die Randkante der in dem Überlappungsbereich oberen Folienbahn. Der sich von der äußeren Randkante dieser Folienbahn bis zu dem Klebestreifen erstreckende Abschnitt liegt lose auf der unteren Folienbahn auf und kann von einem Benutzer gegriffen werden, um die Produktverpackung komfortabel aufzureißen. Der Abschnitt dient folglich als Grifflasche und er hat bevorzugter Weise eine Breite von 1 cm bis 4 cm, insbesondere von 1,5 cm bis 3 cm, bevorzugt von 1,8 cm bis 2,2 cm. Die zu dem Klebestreifen benachbarte Randkante ist zweckmäßigerweise diejenige, welche an einer aus der Verpackungsfolie hergestellten Produktverpackung nach außen weist, also die Randkante der in dem Überlappungsbereich oberen Folienbahn. Der sich von der äußeren Randkante dieser Folienbahn bis zu dem Klebestreifen erstreckende Abschnitt liegt lose auf der unteren Folienbahn auf und kann von einem Benutzer gegriffen werden, um die Produktverpackung komfortabel aufzureißen. Der Abschnitt dient folglich als Grifflasche und er hat bevorzugter Weise eine Breite von 1 cm bis 4 cm, insbesondere von 1,5 cm bis 3 cm, bevorzugt von 1,8 cm bis 2,2 cm. Diese Breiten haben sich als besonders geeignet für eine Grifflasche erwiesen, die bequem von einem Benutzer gegriffen werden kann.

Der Klebestreifen kann ferner in bevorzugter Ausgestaltung eine Dicke von 20 µm bis 100 µm, insbesondere von 40 µm bis 90 µm, bevorzugt von 75 µm bis 85 µm aufweisen.

Alternativ oder zusätzlich kann sich der Klebestreifen und/oder die Siegelnaht durch eine Breite von 3 mm bis 10 mm, insbesondere von 4 mm bis 7 mm, bevorzugt von 4,5 mm bis 5,5 mm auszeichnen und/oder der Überlappungsbereich eine Breite von 3 cm bis 7 cm, insbesondere von 3,5 cm bis 6 cm, bevorzugt von 4 cm bis 5 cm aufweisen.

Es kann weiterhin vorgesehen sein, dass es sich bei dem Klebestreifen um einen durch Aufsprühen hergestellten Klebestreifen handelt. Prinzipiell kann das Hotmelt-Klebematerial im Rahmen der Herstellung der erfindungsgemäßen Verpackungsfolie auf beliebige Weise aufgebracht werden. Das Aufbringen des Klebematerials erfolgt zur Realisierung hoher Herstellungsgeschwindigkeiten zweckmäßiger Weise automatisiert unter Verwendung geeigneter Mittel. Insbesondere das Aufbringen durch Aufsprühen hat sich als geeignet erwiesen, um hohe Fertigungsgeschwindigkeiten zu realisieren. Es ermöglicht darüber hinaus eine besonders präzise Dosierung der Materialmenge und auch die Fläche, auf welche das Material auf die insbesondere an einer zum Einsatz kommenden Klebestation vorbeilaufende Folienbahn aufgebracht wird, ist beim Aufsprühen besonders präzise einstellbar. Im Ergebnis kann die Position und die Breite des Klebestreifens mit besonders hoher Genauigkeit gewählt werden.

Das Klebematerial wird zur Herstellung des Klebestreifens beispielsweise mittels einer Klebestation aufgebracht, bevorzugt aufgesprüht, während eine der beiden Folienbahnen an der Station vorbei gefördert wird. Nach der Aufbringung des Klebematerials auf die erste Folienbahn, insbesondere auf die untere Folienbahn, wird die zweite Folienbahn in dem Überlappungsbereich auf die erste gelegt und die Folienbahnen werden für deren Verbindung gegeneinander verpresst.

Die vorstehend genannte Aufgabe wird ferner bei einem Verfahren der eingangs genannten Art dadurch gelöst, dass die beiden Folienbahnen in dem Überlappungsbereich miteinander verbunden werden, indem
- auf einen inneren Randbereich einer der Folienbahnen, insbesondere der unteren Folienbahn, ein Klebestreifen aufgebracht, insbesondere aufgesprüht wird, der sich in Längsrichtung der Folienbahnen erstreckt,
- die inneren Randbereiche der beiden Folienbahnen anschließend unter Bildung des Überlappungsbereiches aufeinandergelegt und die Folienbahnen im Überlappungsbereich gegeneinander verpresst werden,
- anschließend durch Aufbringung von Wärme und Druck oder durch Aufbringung von Ultraschall und Druck auf die Folienbahnen in dem Überlappungsbereich eine sich in Längsrichtung der Folienbahnen erstreckende, parallel zu dem Klebestreifen orientierte bevorzugt peelbare Siegelnaht hergestellt wird.

Ein Verfahren, welches sich durch die vorgenannten Schritte auszeichnet hat sich als geeignet erwiesen, um eine erfindungsgemäße Verpackungsfolie herzustellen.

In Weiterbildung des erfindungsgemäßen Verfahrens ist vorgesehen, dass die miteinander verbundenen Folienbahnen auf eine Aufwickelrolle aufgewickelt werden, wobei insbesondere zusammen mit den verbundenen Folienbahnen zwei Einlegefolienbahnen aufgewickelt werden, von denen jeweils eine auf einer der Folienbahnen außerhalb des Überlappungsbereiches positioniert wird.

Die erfindungsgemäße Verpackungsfolie kann insbesondere in aufgewickeltem Zustand, also als Verpackungsfolienrolle in Form von Endlosware an Abnehmer geliefert werden, welche diese einer Verpackungsmaschine zuführen, um Produkte in Schlauchbeuteln oder Folienverpackungen anderer Form aus der Verpackungsfolie einzupacken.

Erfindungsgemäß kann ferner vorgesehen sein, dass zusammen mit der Verpackungsfolie zwei Einlegefolienbahnen zu beiden Seiten von dem Überlappungsbereich auf die Aufwickelrolle aufgewickelt werden. Die Einlegefolienbahnen dienen dem Ausgleich des Dickenunterschiedes, der zwischen dem Überlappungsbereich, in dem die beiden Folienbahnen aufeinanderliegen und dem verbleibenden Bereich der Verpackungsfolie besteht.

Die Einlegefolienbahnen können jeweils eine Breite aufweisen, die der außerhalb des Überlappungsbereiches verbleibenden Breite der Folienbahnen entspricht. Alternativ können die Einlegefolienbahnen, um Material und somit Kosten zu sparen, eine Breite aufweisen, die deutlich geringer ist als die verbleibende Breite der Folienbahnen.

So kann beispielsweise vorgesehen sein, dass die Breite der Einlegefolienbahnen maximal 50 %, insbesondere maximal 30 %, bevorzugt maximal 25 % der außerhalb des Überlappungsbereiches verbleibenden Breite der Folienbahnen aufweist.

Darüber hinaus kann vorgesehen sein, dass jede Einlegefolienbahn zu beiden Seiten des Überlappungsbereiches in geeignetem Abstand zu dem Überlappungsbereich sowie zu den äußeren Randkanten der Verpackungsfolie positioniert ist. Beispielsweise kann jede der beiden Einlegefolienbahnen in einem Abstand von mindestens 2 cm, insbesondere von mindestens 3 cm, bevorzugt von mindestens 5 cm zu der benachbarten äußeren Randkante der Verpackungsfolie positioniert ist.

Schließlich betrifft die vorliegende Erfindung eine Vorrichtung zur Herstellung einer Verpackungsfolie, insbesondere gemäß der vorliegenden Erfindung, mit einer Heißsiegeleinrichtung, die ein Gestell, an dem eine Mehrzahl von Führungsrollen drehbar gehalten ist, und eine Heizstation, eine Pressstation und eine Kühlstation umfasst, wobei die Heizstation Heizmittel, die insbesondere wenigsten zwei Schweißbalken umfassen, sowie zwei geschlossene Teflonbänder, die jeweils über mehrere, bevorzugt jeweils über vier der Führungsrollen gelegt und insbesondere mit den Heizmitteln in Kontakt bringbar sind aufweist, und die Kühlstation Kühlmittel, die insbesondere wenigsten zwei Kühlbalken umfassen, sowie wenigsten zwei geschlossene Teflonbänder, die jeweils über mehrere, bevorzugt jeweils über vier der Führungsrollen gelegt und insbesondere mit den Kühlmitteln in Kontakt bringbar sind aufweist, wobei diejenigen Führungsrollen, um welche die Teflonbänder der Heizstation gelegt sind derart angeordnet sind, dass ein Abschnitt des ersten Teflonbandes der Heizstation und ein Abschnitt des zweiten Teflonbandes der Heizstation über eine Strecke vorgegebener Länge parallel zueinander verlaufen, so dass zwischen den beiden parallelen Abschnitten eine Heizstrecke vorgegebener Länge definiert wird, und wobei diejenigen Führungsrollen, um welche die Teflonbänder der Kühlstation gelegt sind derart angeordnet sind, dass ein Abschnitt des ersten Teflonbandes der Kühlstation und ein Abschnitt des zweiten Teflonbandes der Kühlstation über eine Strecke vorgegebener Länge parallel zueinander verlaufen, so dass zwischen den beiden parallelen Abschnitten eine Kühlstrecke vorgegebener Länge definiert wird, und wobei von denjenigen Führungsrollen, um welche jeweils ein Teflonband der Heizstation gelegt ist wenigstens einer ein Antrieb zugeordnet ist, über welchen diese in Rotation versetzt werden kann, und von den Führungsrollen, um welche jeweils ein Teflonband der Kühlstation gelegt ist wenigstens einer ein Antrieb zugeordnet ist, über welchen diese in Rotation versetzt werden kann, und wobei die Pressstation zwei unter Bildung eines Pressspaltes parallel zueinander angeordneten Pressrollen umfasst.

Zwischen den beiden parallel verlaufenden Abschnitten der Teflonbänder der Heizstation wird eine Heizstrecke definiert, durch welche im Betrieb der Vorrichtung zur Herstellung einer Siegelnaht insbesondere der von zwei übereinanderliegenden Folienbahnen oder von zwei übereinanderliegenden Abschnitten einer Folienbahn gebildete Überlappungsbereich geführt wird, um eine lokale Erwärmung der Folienbahn(en) zur Herstellung einer Siegelnaht zu verursachen. In der nachgeordneten Pressstation werden die Folienbahnen bzw. Folienbahnabschnitte verpresst und dann zur Abkühlung durch die Kühlstrecke geführt, welche zwischen den beiden parallel verlaufenden Abschnitten der Teflonbänder der Kühlstation definiert wird.

Mittels der Teflonbänder können im Betrieb die Folienbahnen über die Wärme zuführenden Heizmittel, insbesondere über Schweißbalken dieser, sowie über die Wärme abführenden Kühlmittel, insbesondere über Kühlbalken dieser, geführt werden. Die Teflonbänder eigen sich hierfür aufgrund ihres geringen Reibungskoeffizienten besonders gut. Im Betrieb stehen die Teflonbänder mit der bzw. den Folienbahnen in Kontakt und laufen bevorzugt mit der gleichen oder zumindest nur geringfügig abweichender Geschwindigkeit mit den Folienbahnen mit.

Zur Erwärmung von im Betrieb durch die Vorrichtung geförderter Folienbahnen können beispielsweise Schweißbalken zum Einsatz kommen, die dann bevorzugt jeweils in unmittelbarer Nähe zu den parallel zueinander verlaufenden Abschnitten, und insbesondere auf der von dem jeweils anderen Abschnitt abgewandten Seite des jeweiligen Teflonbandes angeordnet sind. Dabei kann insbesondere jedem Teflonband ein Schweißbalken zugeordnet sein. Die Schweißbalken sind bevorzugt derart bewegbar an dem Gestell der Vorrichtung gehalten, dass sie jeweils in Kontakt mit dem zugeordneten Teflonband bringbar sind. Im Betrieb werden die Schweißbalken bevorzugt derart positioniert, dass sie die Teflonbänder im Bereich der parallel verlaufenden Abschnitte dieser gegen eine bzw. mehrere im Betrieb durch die Heizstrecke geförderte Folienbahn(en) drücken. Dann stehen die Schweißbalken mit dem jeweils zugeordneten Teflonband in Kontakt und die Teflonbänder von beiden Seiten mit der Folienbahn bzw. mit den Folienbahnen in Kontakt. Es reicht aus, wenn der einem Teflonband zugeordnete Schweißbalken bewegbar gehalten und ein dem anderen Teflonband zugeordneter Schweißbalken ortsfest ist, da der bewegbare Balken dann in Richtung des ortsfesten gedrückt werden, um die Folienbahnen gegeneinander zu drücken.

In gleicher Weise können bei der Kühlstation Kühlbalken in unmittelbarer Nähe zu den parallelen Abschnitten der Teflonbänder angeordnet sein, um im Betrieb durch die Vorrichtung geförderte Folienbahnen zu kühlen. Die Kühlbalken, von denen für jedes Teflonband bevorzugt einer vorgesehen ist, können dann insbesondere in völlig analoger Weise derart bewegbar an dem Gestell gehalten sein, dass sie jeweils in Kontakt mit dem zugeordneten Teflonband bringbar sind, wobei auch hinsichtlich der Kühlbalken gilt, dass es ausreicht, wenn der einem der Teflonbänder zugeordneten Kühlbalken bewegbar ist.

In Weiterbildung kann vorgesehen sein, dass die Vorrichtung weiterhin zwei an dem Gestell und/oder an einem weiteren Gestell parallel zueinander gehaltene Abwickelrollen umfasst, an denen jeweils eine Folienvorratsrolle mit einer ein- oder mehrschichtige Folienbahn abwickelbar gehalten werden kann, sowie mehrere an dem Gestell und/oder einem weiteren Gestell gehaltene Führungsrollen, die ausgebildet und angeordnet sind, um wenigstens eine Folienbahn durch die Vorrichtung zu führen, wobei die Abwickelrollen und die Führungsrollen insbesondere derart angeordnet sind, dass zwei Folienbahnen parallel zueinander durch die Vorrichtung geführt werden und die beiden Folienbahnen in ihren einander zugewandten inneren Randbereichen unter Bildung eines Überlappungsbereiches aufeinander gelegt werden können, und wobei die Heißsiegeleinrichtung den Abwickelrollen nachgeordnet ist.

Auch kann vorgesehen sein, dass von denjenigen Führungsrollen, um die jeweils ein Teflonband der Heizstation gelegt ist und/oder von denjenigen Führungsrollen, um die jeweils ein Teflonband der Kühlstation gelegt ist wenigstens eine Führungsrolle direkt oder indirekt antreibbar ist. Die Teflonbänder von Heiz- und/oder Kühlstation können dann angetrieben werden, so dass sie im Betrieb mit der/den die Heiz- und/oder Kühlstrecke durchlaufenden Folienbahn(en) mitlaufen können.

Die Vorrichtung kann darüber hinaus eine bevorzugt zwischen den Abwickelrollen und der Heißsiegeleinrichtung angeordnete Klebestation umfassen, die ausgebildet ist, um einen Klebestreifen aus einem Hotmelt auf eine durch die Vorrichtung geführte Folienbahn aufzubringen, insbesondere aufzusprühen, wobei die Klebestation bevorzugt einen Sprühkopf zum Aufsprühen von Klebematerials umfasst, der insbesondere bewegbar an dem Gestell bzw. dem weiteren Gestell gehalten ist. Ist der Sprühkopf bewegbar gehalten, kann insbesondere die Position des Klebestreifens auf einer Folienbahn variiert werden, insbesondere der Abstand zwischen dem Klebestreifen und der Siegelnaht eingestellt bzw. angepasst werden.

Auch kann die Vorrichtung eine weitere Pressstation mit zwei unter Bildung eines Pressspaltes parallel zueinander angeordneten Pressrollen umfassen, die dann bevorzugt zwischen der Klebestation und der Heißsiegeleinrichtung angeordnet ist.

Die Vorrichtung kann weiterhin eine Fördereinrichtung zur Förderung von wenigstens einer Folienbahnen durch die Vorrichtung aufweisen, die insbesondere den Abwickelrollen und/oder den Führungsrollen zugeordnete Antriebseinheiten umfasst, durch welche die Rollen in eine vorgegebene Drehrichtung angetrieben werden.

Um eine oder mehrere durch die erfindungsgemäße Vorrichtung geförderte Folinebahn(en), aus denen mittels der Vorrichtung eine Verpackungsfolie hergestellt wird aufzurollen, kann die Vorrichtung ferner eine der Heißsiegeleinrichtung nachgeordnete Aufwickelrolle aufweisen, welche derart ausgebildet und angeordnet ist, dass wenigstens eine durch die Vorrichtung geförderte Folienbahn auf diese aufwickelbar ist. Die durch Aufwickeln der erfindungsgemäßen Verpackungsfolie erhaltene Verpackungsfolienrolle kann in an sich bekannter Weise platzsparend gelagert und effizient transportiert werden.

Dann ist in bevorzugter Ausgestaltung noch eine weitere Abwickelrolle zur Aufnahme einer Einlegefolienvorratsrolle, auf welcher axial beabstandet zwei Einlegefolienbahnen aus einer ein- oder mehrschichtigen Folie aufgerollt sind, vorgesehen, wobei die weitere Abwickelrolle derart angeordnet ist, dass die Einlegefolienbahnen zusammen mit wenigstens einer durch die Vorrichtung geförderten Folienbahn auf die Aufwickelrolle aufwickelbar sind. Die Aufwickelung erfolgt dann insbesondere derart, dass auf jeder Folienbahn außerhalb des Überlappungsbereichs eine Einlegefolienbahn aufliegt.

Es können ferner Führungsmittel zum außenseitigen Führen von wenigstens einer durch die Vorrichtung geförderten Folienbahn vorgesehen sein. Hierdurch ist gewährleistet, dass die Folienbahnen präzise durch die erfindungsgemäße Vorrichtung gefördert werden und die Siegelnaht und der Klebestreifen zuverlässig an den für diese vorgesehenen Positionen im Überlappungsbereich aufgebracht bzw. hergestellt werden können.

Schließlich können die beiden Abwickelrollen und/oder die Führungsrollen und/oder die Aufwickelrolle und/oder die weitere Abwickelrolle seitlich positionierbar an dem Gestell bzw. dem weiteren Gestell gehalten sein. Mit der seitlichen Positionierung der Rollen kann insbesondere die Breite des Überlappungsbereiches von zwei durch die Vorrichtung geförderten Folienbahnen variiert werden und die Vorrichtung kann an unterschiedliche Breiten der Folienbahnen angepasst werden. Somit können im Ergebnis Verpackungsfolien unterschiedlicher Dimensionierung erhalten werden.

Eine erfindungsgemäße Verpackungsfolie mit einem Klebestreifen zwischen den beiden Folienbahnen in dem Überlappungsbereich und einer Siegelnaht in dem Überlappungsbereich kann unter Verwendung einer erfindungsgemäßen Vorrichtung, die sich durch die vorstehenden Merkmale auszeichnet, auf einfache und kostengünstige Weise hergestellt werden.

Das Auflegen des Randbereiches der zweiten, insbesondere oberen Folienbahn auf den inneren Randbereich der ersten, insbesondere unteren Folienbahn, auf welche das Klebematerial mittels der Klebestation aufgebracht wurde, sowie das Verpressen der beiden Folienbahnen in dem Überlappungsbereich erfolgt zweckmäßiger Weise zeitnah im Anschluss an das Aufbringen des Klebematerials. So ist gewährleistet, dass das aufgebrachte, insbesondere aufgesprühte Material noch heiß und/oder flüssig ist, wenn die zweite Folienbahn in dem Überlappungsbereich auf die erste gelegt und die Folienbahnen anschließend in der Pressstation gegeneinander verpresst werden. Das Auflegen der zweiten Folienbahn auf die erste kann insbesondere auch unmittelbar im Bereich des Pressspaltes erfolgen, also die zweite Folienbahn kann über eine der Pressrollen der Pressstation auf die erste Folienbahn gefädelt werden.

Die Zeit, welche zwischen dem Aufbringen des Klebematerials sowie dem Aufeinanderlegen und Verpressen der Folienbahnen maximal vergehen sollte liegt beispielsweise im Bereich von nur wenigen Millisekunden. Die Zeit wird minimiert, indem der Abstand in Laufrichtung der Folie zwischen der Klebestation und der Stelle, an welcher aufgelegt und verpresst wird minimiert und die Laufgeschwindigkeit der Folienbahnen durch die Vorrichtung maximiert wird. Eine hohe Laufgeschwindigkeit ist auch wünschenswert, um möglichst viele Meter der erfindungsgemäßen Verpackungsfolie mit vergleichsweise geringem Zeitaufwand zu produzieren.

Darüber hinaus kann vorgesehen sein, dass die beiden Pressrollen der Pressstation und/oder der weiteren Pressstation zur Einstellung einer Pressspaltdicke an dem Gestell aufeinander zu und voneinander weg bewegbar gehalten sind. Die Einstellbarkeit des Abstandes der Pressrollen dient in erster Linie der Anpassung der Vorrichtung an unterschiedlich Dicke Folienbahnen sowie der Variation des Pressdruckes.

Auch kann eine der Klebestation vorgeschaltete Aufrauhungseinrichtung vorgesehen sein, die insbesondere ausgebildet und angeordnet ist, um wenigstens eine Folienbahn, bevorzugt in dem Überlappungsbereich, zur Erhöhung der Oberflächenspannung aufzurauhen. Dies ist insbesondere für den Fall zweckmäßig, dass die Folienbahnen an einer Seite ein Material mit vergleichsweise geringer Oberflächenspannung aufweisen, auf welchem Hotmelt-Materialien weniger gut haften. Durch das Aufrauhen, welches an der Oberfläche wenigstens einer Folienbahn erfolgen kann, wird die Haftung der Hotmelt-Materialien des Klebestreifens erhöht. Als Aufrauhungseinrichtung kann beispielsweise eine Corona-Anlage zum Einsatz kommen.

Die erfindungsgemäße Vorrichtung zur Herstellung einer Verpackungsfolie umfasst weiterhin zweckmäßiger Weise eine zentrale Steuerungseinrichtung. Über diese werden insbesondere der Abwickelvorgang der Folienbahnen von den Vorratsrollen und/oder deren Transport durch die Vorrichtung mittels der Führungsrollen und/oder deren Laufgeschwindigkeit und/oder die Zufuhr des Klebematerials über die entsprechende Station, insbesondere die Zufuhrmenge pro Zeit sowie Streifenbreite, und die Herstellung der Siegelnaht gesteuert. Darüber hinaus kann die Steuereinrichtung auch zum Einsatz kommen, um den Abwickelvorgang der Einlegefolienstreifen, den Aufwickelvorgang der fertigen Verpackungsfolie, die Druck- und die Aufrauhungseinrichtung zu steuern.

Für den Fall, dass die Siegelnaht in der Verpackungsfolie nicht durch Heißsiegeln sondern durch Ultraschallsiegeln hergestellt werden soll, kann die erfindungsgemäße Vorrichtung anstelle der Heißsiegeleinrichtung auch eine Ultraschallsiegeleinrichtung umfassen.

Entsprechend ist ein weiterer Gegenstand der vorliegenden Erfindung eine Vorrichtung zur Herstellung einer Verpackungsfolie, insbesondere gemäß der vorliegenden Erfindung, umfassend
- zwei an einem Gestell parallel zueinander gehaltene Abwickelrollen, an denen jeweils eine Folienvorratsrolle mit einer ein- oder mehrschichtige Folienbahn abwickelbar gehalten werden kann, sowie mehrere an dem Gestell gehaltene Führungsrollen, die ausgebildet und angeordnet sind, um wenigstens eine Folienbahn durch die Vorrichtung zu führen, wobei die Abwickelrollen und die Führungsrollen insbesondere derart angeordnet sind, dass zwei Folienbahnen parallel zueinander durch die Vorrichtung geführt werden und die beiden Folienbahnen in ihren einander zugewandten inneren Randbereichen unter Bildung eines Überlappungsbereiches aufeinander gelegt werden können,
- eine den Abwickelrollen nachgeordnete Klebestation, die ausgebildet ist, um einen Klebestreifen aus einem Hotmelt auf eine durch die Vorrichtung geführte Folienbahn aufzubringen, insbesondere aufzusprühen, wobei die Klebestation bevorzugt einen Sprühkopf zum Aufsprühen von Klebematerial umfasst, der insbesondere bewegbar an dem Gestell gehalten ist,
- eine der Klebestation nachgeordnete Pressstation mit zwei unter Bildung eines Pressspaltes parallel zueinander angeordneten Pressrollen, und
- eine der Pressstation nachgeordnete Ultraschall-Siegeleinrichtung, die bevorzugt wenigstens eine drehbar gelagerte, rollenförmige Ultraschallsonde und eine ebenfalls drehbar gelagerte Pressrolle umfasst, die unter Bildung eines Pressspaltes parallel zueinander angeordnet sind.

Einrichtungen zur Herstellung von Siegelnähten mittels Ultraschall können sich durch eine besonders kompakte Bauweise auszeichnen. Eine Ultraschallsiegeleinrichtung kann beispielsweise eine drehbar gelagerte rollenförmige Ultraschallsonde und eine ebenfalls drehbar gelagerte, für die Aufbringung des Drucks sorgende Pressrolle umfassen bzw. durch diese gebildet werden. Zur Herstellung einer erfindungsgemäßen Verpackungsfolie wird dann bevorzugt der Überlappungsbereich der beiden Folienbahnen durch einen zwischen der Sonde und der Pressrolle gebildeten Pressspalt geführt und gleichzeitig lokal sowohl Ultraschallwellen als auch Druck aufgebracht, um die Siegelnaht in dem Überlappungsbereich herzustellen.

Auch in dem Fall, dass die Vorrichtung anstelle einer Heißsiegeleinrichtung eine Ultraschall-Siegeleinrichtung umfasst, können alle vorstehend beschriebenen Weiterbildungen verwirklicht sein, kann insbesondere zusätzlich eine Fördereinrichtung zur Förderung von wenigstens einer Folienbahn durch die Vorrichtung und/oder eine Aufwickelrolle und/oder eine weitere Aufwickelrolle und/oder Führungsmittel zum außenseitigen Führen von wenigstens einer durch die Vorrichtung geförderten Folienbahn vorgesehen sein und die Abwickelrollen und/oder die weitere Abwickelrolle und/oder die Führungsrollen und/oder die Aufwickelrolle können seitlich positionierbar an einem Gestell der Vorrichtung gehalten sein.

Eine Heißsiegel- bzw. Ultraschallsiegeleinrichtung, eine Klebestation und eine zwischen der Klebestation und der Heißsiegeleinrichtung vorgesehene Pressstation können zusammen eine Verbindungseinrichtung der erfindungsgemäßen Vorrichtung bilden.

In der Zeichnung ist die Erfindung anhand eines Ausführungsbeispiels näher veranschaulicht. Es zeigen:
- Figur 1: eine erfindungsgemäße Verpackungsfolie in schematischer Schnittdarstellung,
- Figur 2: in schematischer Darstellung einen Abschnitt der in Figur 1 dargestellten Verpackungsfolie,
- Figur 3: eine erfindungsgemäße Vorrichtung zur Herstellung einer Verpackungsfolie in schematischer Schnittdarstellung,
- Figur 4: in schematischer Darstellung eine Aufsicht auf einen Teil der Vorrichtung aus Figur 3 mit zwei Abwickelrollen, Klebe- und Pressstation,
- Figur 5: in schematischer Darstellung eine vergrößerte Schnittdarstellung der Heißsiegeleinrichtung der Vorrichtung aus Figur 3,
- Figur 6: in schematischer Darstellung eine vergrößerte Darstellung der Abwickelrolle mit Einlegefolienbahn der Vorrichtung aus Figur 3 von oben, und

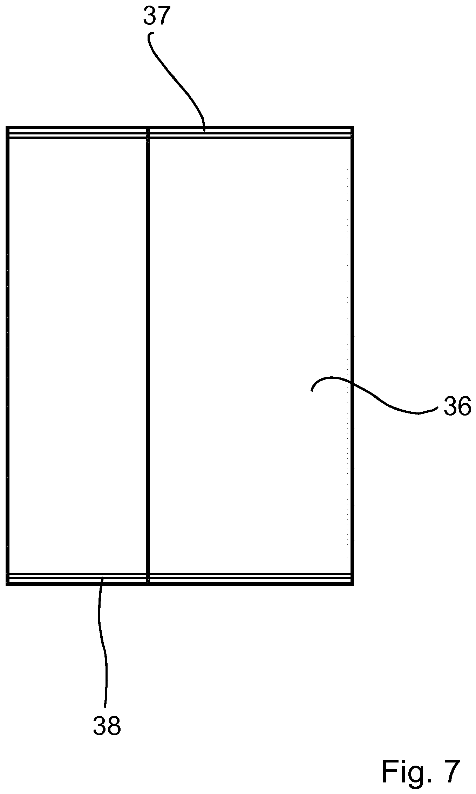

- Figur 7: in schematischer Darstellung eine Aufsicht auf einen Schlauchbeutel, der aus dem in Figur 2 dargestellten Abschnitt der erfindungsgemäßen Verpackungsfolie hergestellt ist.

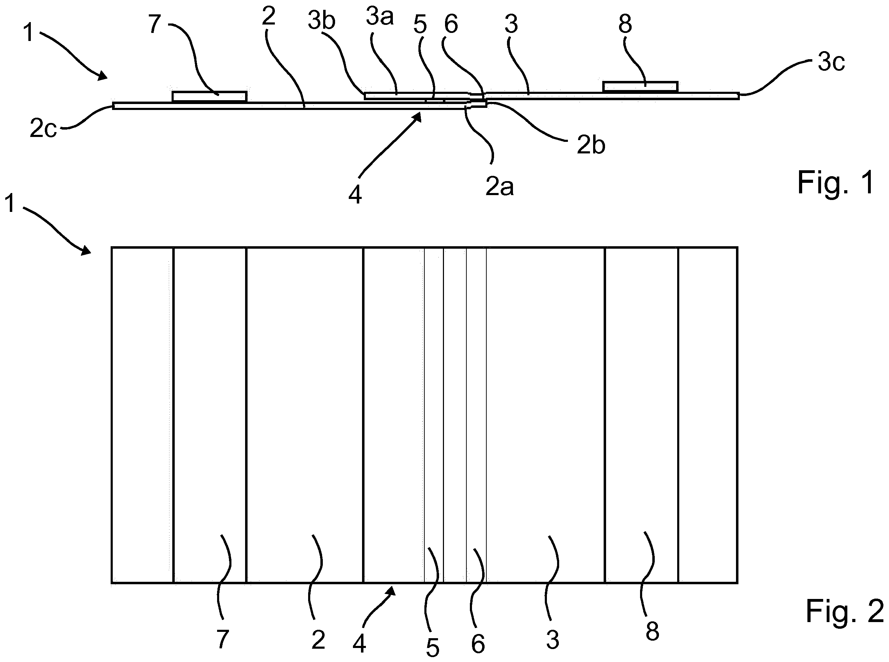

Die Figur 1 zeigt in schematischer Darstellung eine erfindungsgemäße Verpackungsfolie 1 im Schnitt. Die Verpackungsfolie 1 umfasst zwei Folienbahnen 2, 3. Bei jeder der Folienbahnen 2, 3 handelt es sich um eine Mehrschichtfolie, welche jeweils eine Breite von 25 cm sowie eine Dicke von etwa 35 µm aufweist.

Wie in der Figur 2, die eine Aufsicht auf einen Abschnitt der in Figur 1 dargestellten Verpackungsfolie 1 zeigt, gut zu erkennen ist, erstrecken sich die beiden Folienbahnen 2, 3 parallel zueinander. Die beiden Folienbahnen 2, 3 sind ferner derart zueinander angeordnet, dass ihre einander zugewandten inneren Randbereiche 2a, 3a unter Bildung eines Überlappungsbereiches 4 aufeinanderliegen. In dem Überlappungsbereich 4, welcher bei dem dargestellten Ausführungsbeispiel eine Breite von 4 cm aufweist, liegt die in der Figur 1 rechte Folienbahn 3 auf der in Figur 1 linken Folienbahn 2. Die beiden Folienbahnen 2, 3 werden daher im Weiteren als obere Folienbahn 3 und unter Folienbahn 2 bezeichnet.

Jede der beiden Folienbahnen 2, 3 weist anihrer einen Außenseiten eine Schicht aus PP, an ihrer anderen Außenseite eine Schicht aus PE sowie eine dazwischenliegende Barriereschicht auf. Bei der Schicht aus PE handelt es sich vorliegend um Metallocen-PE. Bei dem dargestellten Ausführungsbeispiel weisen die beiden Folienbahnen 2, 3 an ihrer in Figur 1 nach unten weisenden Seite, also an ihrer Unterseite, die bem einer aus der Verpackungsfolie 1 hergestellten Verpackung bevorzugt die Innenseite bildet, die Schicht aus Metallocen-PE auf und an ihrer in Figur 1 nach oben weisenden Seite, also an ihrer Oberseite die Schicht aus PP.

Die beiden Folienbahnen 2, 3 sind ferner durch einen Klebestreifen 5 aus einem Hotmelt-Material sowie eine Siegelnaht 6 miteinander verbunden. Der Klebestreifen 5 ist in dem Überlappungsbereich 4 zwischen den beiden Folienbahnen 2, 3 vorgesehen und die Siegelnaht 6 erstreckt sich ebenfalls in dem Überlappungsbereich 4. Der Klebestreifen 5 und die Siegelnaht 6 erstrecken sich parallel zueinander in Längsrichtung der Folienbahnen 2, 3 und sind, wie in den Figuren gut erkennbar ist, nebeneinanderliegend angeordnet. Der Klebestreifen 5 und der Siegelnaht 6 weisen jeweils eine Breite von etwa 4 mm auf. Der Klebestreifen 5 zeichnet sich ferner durch eine Dicke von etwa 80 µm aus. Die Siegelnaht 6 ist peelbar.

Der Klebestreifen 5 wurde hergestellt, indem ein Hotmelt-Material, und zwar ein Hotmelt-Kleber durch Aufsprühen auf die untere Folienbahn 2 aufgebracht wurde.

Die Siegelnaht 6 wurde hergestellt, indem Wärme und Druck lokal auf die beiden Folienbahnen 2,3 in dem Überlappungsbereich 4 aufgebracht wurde. Konkret wurde die Siegelnaht 6 durch Heißsiegeln hergestellt.

Wie in der Figur 1 gut erkennbar, ist der Klebestreifen 5 zu der Randkante 3b der oberen Folienbahn 3 benachbart. Die Siegelnaht 6 hingegen ist zu der Randkante 2b der unteren Folienbahn 2 benachbart. Während der Klebestreifen 5 zu der Randkante 3b der oberen Folienbahn 3 einen Abstand von 2 cm aufweist, liegt die Siegelnaht 6 unmittelbar an der Randkante 2b der unteren Folienbahn 2, erstreckt sich also in Querrichtung der Folienbanen 2, 3 bis zu der benachbarten Randkante 2b. Hierdurch wir gewährleistet, dass aus der erfindungsgemäßen Verpackungsfolie 1 besonders dichte Verpackungen herstellbar sind.

Die in den Figuren 1 und 2 erkennbare erfindungsgemäße Verpackungsfolie 1 wird, was in den Figuren nicht erkennbar ist, auf einer Verpackungsfolienrolle aufgewickelt gelagert. Wird die erfindungsgemäße Folie 1 auf eine Rolle aufgewickelt, so besteht das Problem, dass diese in dem Überlappungsbereich 4 eine Dicke aufweist, welche der Summe der Dicke jeder der beiden Folienbahnen 2, 3 sowie der Dicke des Klebestreifens 5 entspricht, während sie außerhalb des Überlappungsbereiches 4, nämlich links und rechts von diesem eine Dicke aufweist, die nur der einer einzelnen Folienbahn 2, 3 entspricht. Beim Aufwickeln nimmt die Dicke der Aufwickelrolle daher in dem Überlappungsbereich 4 erheblich schneller zu als in dem seitlichen Randbereichen. Um diesem Problem zu begegnen, sind auf die in den Figuren nicht dargestellte Verpackungsfolienrolle zusammen mit der erfindungsgemäßen Verpackungsfolie 1 zwei Einlegestreifen 7, 8 mit aufgewickelt, die dem Ausgleich des Dickenunterschiedes zwischen dem Überlappungsbereich 4 und den beiden Bereichen außerhalb rechts und links des Überlappungsbereiches 4 dienen. Die beiden Einlegestreifen 7, 8, die in der schematischen Schnittdarstellung in Figur 1 erkennbar sind, haben jeweils eine Breite von 3 cm, eine Dicke von 115 µm und sind in einem Abstand von 4 cm zu den nach außen weisenden Randkanten 2c, 3c der beiden Folienbahnen 2, 3 vorgesehen. Die Einlegestreifen 7, 8 sind aus geschäumtem Polypropylen gefertigt.

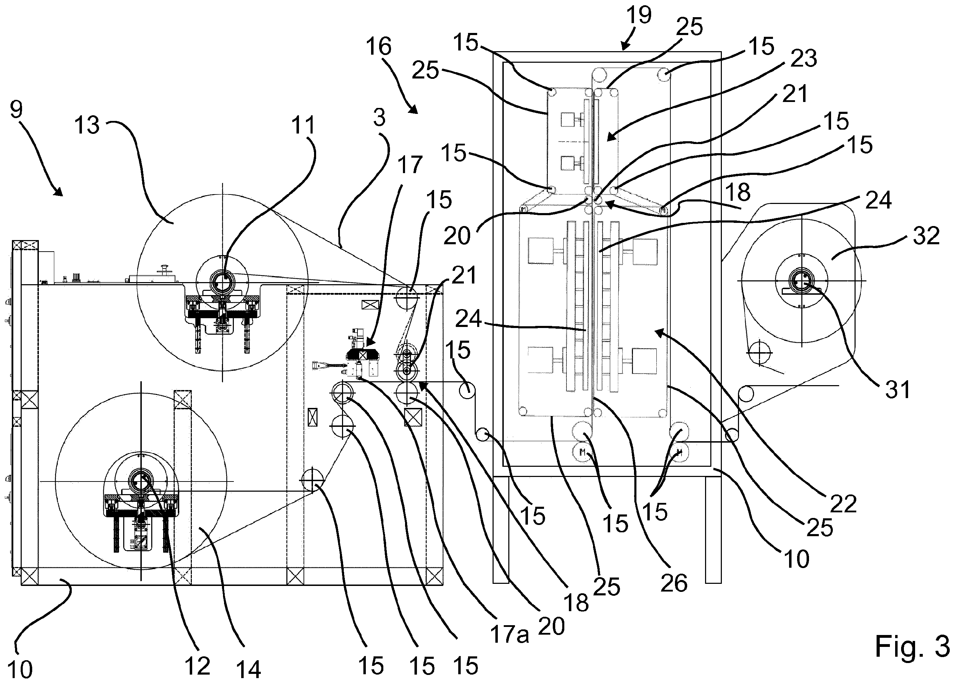

Die in den Figuren 1 und 2 dargestellte erfindungsgemäße Verpackungsfolie 1 wurde mit der in Figur 3 dargestellten erfindungsgemäßen Vorrichtung 9 zur Herstellung einer Verpackungsfolie 1 gefertigt.

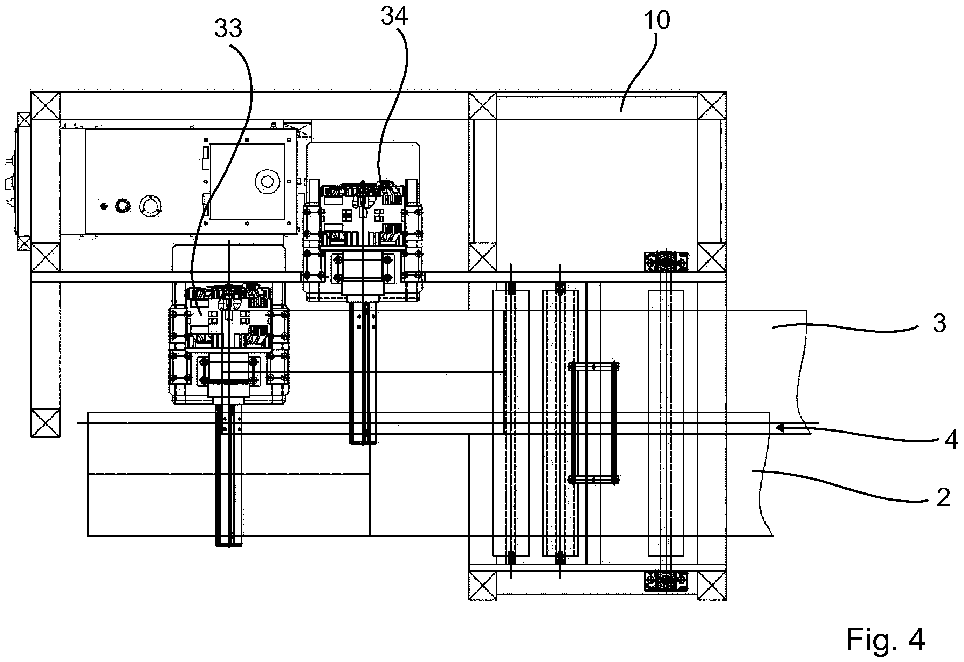

Die erfindungsgemäße Vorrichtung 9 umfasst zwei Gestelle 10, wobei an dem ersten, in Figur 3 linken Gestell zwei Abwickelrollen 11, 12 parallel zueinander gehalten sind, was in der Aufsicht auf das erste Gestell 10 in Figur 4 gut zu erkennen ist. An jeder der beiden Abwickelrollen 11, 12 ist jeweils eine Folienvorratsrolle 13, 14 abgewickelbar gehalten, wobei auf jeder Folienvorratsrolle 13, 14 jeweils eine der Folienbahnen 2, 3 einer Breite von 25 cm aufgewickelt ist.

Die erfindungsgemäße Vorrichtung 9 umfasst weiterhin eine Vielzahl von an den beiden Gestellen 10 gehaltenen Führungsrollen 15, die ausgebildet und angeordnet sind, um die von den Folienvorratsrollen 13, 14 abgewickelten Folienbahnen 2, 3 durch die Vorrichtung 9 zu führen.

Wie aus den Figuren 3 und 4 hervorgeht, sind die Abwickelrollen 11, 12 und die Führungsrollen 15 derart angeordnet, dass die Folienbahnen 2, 3 parallel zueinander durch die Vorrichtung 9 geführt werden und zwar derart versetzt zueinander, dass die Folienbahnen 2, 3 in ihren einander zugewandten inneren Randbereichen 2a, 3a unter Bildung des Überlappungsbereiches 4 aufeinandergelegt werden können.

Die Vorrichtung 9 umfasst des Weiteren eine Verbindungseinrichtung 16, die ausgebildet ist, um die beiden Folienbahnen 2, 3 in dem Überlappungsbereich 4 lösbar miteinander zu verbinden. Hierzu weist die Verbindungseinrichtung 16 eine Klebestation 17, eine der Klebestation 17 nachgeordnete Pressstation 18 sowie vorliegend eine Heißsiegeleinrichtung 19 auf.

Die Klebestation 17 ist ausgebildet, um auf den inneren Randbereich 2a der unteren Folienbahn 2 den Klebestreifen 5 aus einem Hotmelt, also Schmelzkleber aufzubringen. Bei dem dargestellten Ausführungsbeispiel weist die Klebestation 17 einen Sprühkopf 17a zum Aufsprühen des Klebematerials auf. Der Sprühkopf 17a der Klebestation 17 ist in Längsrichtung der Folienbahn 2, 3 und quer zu der Längsrichtung der Folienbahnen 2, 3 bewegbar an dem Gestell 10 der Vorrichtung 9 gehalten, damit die Position des Klebestreifens 5 auf der unteren Folienbahn 2 präzise einstellbar ist.

Die in Folienlaufrichtung durch die Vorrichtung 9 nachgeordnete Pressstation 18 der Verbindungseinrichtung 16 umfasst zwei unter Bildung eines Pressspaltes parallel zueinander angeordnete Pressrollen 20, 21. Die Pressstation 18 ist derart ausgebildet und positioniert, dass die Folienbahnen 2, 3, wie in Figur 3 gut erkennbar, durch den Pressspalt geführt und infolge dessen in dem Überlappungsbereich 4 gegeneinander verpresst werden. Dabei wird die obere Folienbahn 3, wie in der Figur 3 gut erkennbar, im Bereich der Pressstation 18 auf die untere Folienbahn 2 aufgelegt.

Die beiden Pressrollen 20, 21 der Pressstation 18 sind zur Einstellung der Pressspaltdicke an dem Gestell 10 aufeinander zu und voneinander weg bewegbar gehalten. Hierdurch ist es insbesondere möglich, Folienbahnen 2, 3 unterschiedlicher Dicke zu verarbeiten.

Den beiden Pressrollen 20, 21 nachgeordnet sind zwei weitere Führungsrollen 15, über welche die beiden Folienbahnen 2, 3, die an dieser Position in der Vorrichtung 9 bereits über den Klebestreifen 5 in dem Überlappungsbereich 4 miteinander verbunden sind, zu der nachgeordneten Heißsiegeleinrichtung 19, die an dem zweiten Gestell 10 der Vorrichtung 9 gehalten ist, zu führen.

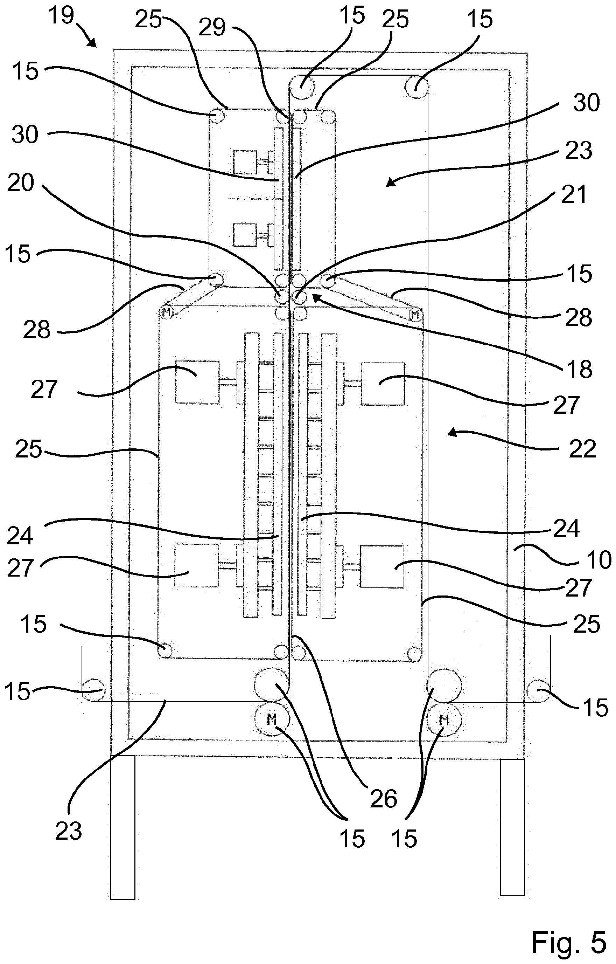

Eine vergrößerte schematische Darstellung der Heißsiegeleinrichtung 19 der Verbindungseinrichtung 16 kann der Figur 5 entnommen werden. Die Heißsiegeleinrichtung 19 umfasst ebenfalls eine Mehrzahl von drehbar an dem Gestell 10 gehaltenen weiteren Führungsrollen 15, über welche die beiden miteinander verbundenen Folienbahnen 2, 3 durch die Heißsiegeleinrichtung 19 geführt werden.

Die Heißsiegeleinrichtung 19 umfasst ferner zur Herstellung der Siegelnaht 6 in dem Überlappungsbereich 4 eine Heizstation 22, welche ausgebildet ist, um die miteinander verbundenen Folienbahnen 2, 3 in dem Überlappungsbereich 4 lokal zu erwärmen, eine der Heizstation 22 nachgeordnete weitere Pressstation 18 mit zwei Pressrollen 20, 21, um die beiden Folienbahnen 2, 3 im erwärmten Zustand miteinander zu verpressen sowie eine der weiteren Pressstation 18 nachgeordnete Kühlstation 23, um die beiden Folienbahnen 2, 3 im Überlappungsbereich zu kühlen.

Die Heizstation 22 weist für die lokale Erwärmung der Folienbahnen 2, 3 Heizmittel auf, die vorliegend durch insgesamt zwei Schweißbalken 24 gebildet werden. Die Heizstation 22 umfasst ferner zwei geschlossene, im Betrieb erwärmte Teflonbänder 25, die um jeweils vier an dem weiteren Gestell 10 gehaltenen Führungsrollen 15, von denen in der Schnittdarstellung gemäß Figur 5 ein Rechteck aufgespannt wird, gelegt bzw. gespannt sind. Von den beiden Teflonbändern 25 wird somit im Schnitt ebenfalls jeweils in etwa ein Rechteck aufgespannt. Von den vier jeweils ein Teflonband 25 tragenden Führungsrollen 15 sind je zwei servomotorisch antreibbar. Die Rotationgeschwindigkeit dieser in den Figuren wiederum mit einem "M" gekennzeichneten antreibbaren Führungsrollen 15 ist einstellbar.

Die Breite der Schweißbalken 24 wird in Abhängigkeit der gewünschten Breite der herzustellenden Siegelnaht 6 gewählt. Vorliegend beträgt diese 4 mm. Die Breite der beiden Teflonbänder 25 beläuft sich ferner auf 20 mm. Unter der Breite ist dabei Ausdehnung in einer Richtung orthogonal zu der Zeichenebene zu verstehen.

Die die Teflonbänder 25 tragenden Führungsrollen 15 sind ferner derart angeordnet, dass die beiden einander gegenüberliegenden Abschnitte der Teflonbänder 25, also die in Figur 5 nach innen weisenden Seiten der beiden aufgespannten Rechtecke parallel zueinander verlaufen und eine Heizstrecke 26 definieren, durch welche die beiden miteinander verbundenen Folienbahnen 2, 3 geführt werden, konkret der Überlappungsbereich 4, um die Folienbahnen 2, 3 zur Herstellung der Siegelnaht 6 lokal zu erwärmen.

Die zwei Schweißbalken 24 sind unmittelbar neben den die Heizstrecke 26 definierenden Abschnitten der Teflonbänder 25 angeordnet und jeweils mit einer Drei-Zonen-Heizpatrone regelbar sowie über insgesamt vier Pneumatikzylinder 27, von denen jeweils zwei einem Schweißbalken 24 zugeordnet sind, in einer Richtung quer zu der Heizstrecke 26 bewegbar, um den Schweißdruck regeln zu können. Der Schweißdruck kann dabei je nach Stärke der zum Einsatz kommenden Folienbahnen 2, 3 gewählt werden.

Der Heizstation 22 nachgeordnet sind die beiden die weitere Pressstation 18 bildenden Pressrollen 20, 21, durch welche die beiden miteinander verbundenen Folienbahnen, die über die Teflonbänder 25 entlang der beiderseitig angeordneten Schweißbalken 24 geführt und im Bereich der Heizstrecke 25 lokal erwärmt und gegeneinander gedrückt wurden, nochmals miteinander verpresst werden. Die beiden Pressrollen 20, 21 der weiteren Pressstation 18 sind ebenfalls zur Einstellung der Pressspaltdicke an dem weiteren Gestell 10 aufeinander zu und voneinander weg bewegbar gehalten, so dass insbesondere Folienbahnen 2, 3 unterschiedlicher Dicke verarbeitbar sind.

In Laufrichtung der Folienbahnen 2, 3 hinter der weiteren Pressstation 18 sind zwei weitere Teflonbänder 25 angeordnet, welche Bestandteil der Kühlstation 23 sind und - in Analogie zu den Teflonbändern 25 der Heizstation 22 - jeweils um vier ein Rechteck aufspannende Führungsrollen 15 gelegt sind. Von den vier Führungsrollen 15 pro Teflonband 25 der Kühlstation 23 sind jeweils zwei indirekt antreibbar, indem diese über einen Zwischentrieb 28 mit den antreibbaren Führungsrollen 15 für die Teflonbänder 25 der Heizstation 22 gekoppelt sind. Von den beiden einander zugewandten Abschnitten der Teflonbänder 25 der Kühlstation 23 wird - ebenfalls in Analogie zu der Heizstation 22 - eine Kühlstrecke 29 definiert, entlang welcher die beiden miteinander verbundenen Folienbahnen 2, 3 geführt werden, konkret der Überlappungsbereich 4, um die Folienbahnen 2, 3 nach deren Erwärmung und Verpressung lokal zu kühlen.

Die beiden Teflonbänder 25 der Kühlstation 23 zeichnen sich vorliegend ebenfalls durch eine Breite von 20 mm aus.

Für die Kühlung der Folienbahnen 2, 3 umfasst die Kühlstation 23 zwei Kühlbalken 30, die unmittelbar neben den die Kühlstrecke 29 definierenden Abschnitten der Teflonbänder 25 der Kühlstation 23 angeordnet sind sowie insgesamt zwei weitere Pneumatikzylinder 27, über welche der in Figur 5 links angeordnete Kühlbalken 30 in einer Richtung quer zu der Kühlstrecke 29 bewegbar ist. Der in der Figur 5 rechts angeordnete Kühlbalken 30 ist hingegen ortsfest an dem Gestell 10 gehalten. Die Breite der Kühlbalken 30 beträgt vorliegend - in Analogie zu den Schweißbalken 24 - 4 mm.

Im Betrieb der Vorrichtung 9 werden alle vier Teflonbänder 24 derart umlaufend angetrieben, dass sie im Bereich der Heizstrecke 25 und der Kühlstrecke 29 mit den durch die Heißsiegeleinrichtung 19 geförderten Folienbahnen 2, 3 mitlaufen.

Die Schweißbalken 24 der Heizstation 22 sind im Betrieb mittels der Pneumatikzylinder 27 derart positioniert, dass sie mit einem gewünschten Druck von beiden Seiten gegen die Folienbahnen 2, 3 drücken, so dass diese im Bereich der Heizstrecke 26 erwärmt und gleichzeitig gegeneinander gedrückt werden. Somit stehen im Betrieb die Schweißbalken 24 mit dem jeweiligen Teflonband 25 und die beiden Teflonbändern 25 auf ihrer anderen Seite mit den Folienbahnen 2, 3 in Kontakt. Dies ist in den Figuren 3 und 5, welche die Heizstation 22 im Ruhezustand zeigen, nicht erkennbar.

In analoger Weise ist im Betrieb der linke Kühlbalken 30 der Kühlstation 23 derart positioniert, dass die beiden Kühlbalken 30 mit den beiden Teflonbändern 25 und die beiden Teflonbänder 25 auch mit den beiden durch die Kühlstrecke 29 geförderten Folienbahnen 2, 3 in Kontakt stehen und die beiden Kühlbalken 30 mit einem gewünschten Druck im Bereich der Kühlstrecke 29 von beiden Seiten gegen die Folienbahnen 2, 3 drücken, so dass diese gekühlt und gegeneinander gepresst werden.

Die Teflonbänder 25 sorgen dabei aufgrund ihres geringen Reibungskoeffizienten dafür, dass die Folienbahnen 2, 3 im Betrieb gut über die beiderseits der Folienbahnen 2, 3 angeordneten Schweißbalken 24 und Kühlbalken 30 geführt werden können, während die Schweißbalken 24 bzw. Kühlbalken 30 mit den Teflonbändern 25 und die Teflonbänder 25 auch mit den Folienbahnen 2, 3 in Kontakt stehen.

Die Vorrichtung 9 umfasst ferner eine in den Figuren nicht dargestellte, der Verbindungseinrichtung 16 nachgeordnete Aufwickelrolle, die derart angeordnet und ausgebildet ist, dass die beiden Folienbahnen 2, 3 im miteinander verbundenen Zustand, also die hergestellte Verpackungsfolie 1, für den Transport und die Lagerung platzsparend aufgewickelt werden. Bei dem dargestellten Ausführungsbeispiel ist die Aufwickelrolle an einem in der Figur nicht dargestellten dritten Gestell gehalten, welches unmittelbar hinter dem weiteren Gestell 10 positioniert ist.

Zwischen der in den Figuren nicht dargestellten Aufwickelrolle und der Verbindungseinrichtung 16 ist eine weitere Abwickelrolle 31 zur Aufnahme einer Einlegefolienvorratsrolle 32 vorgesehen, auf welcher axial beabstandet die zwei Einlegefolienbahnen 7, 8 aufgerollt sind. Die weitere Abwickelrolle 31 ist derart angeordnet, dass die Einlegefolienbahnen 7, 8 zusammen mit den verbundenen Folienbahnen 2, 3, also zusammen mit der erfindungsgemäßen Verpackungsfolie 1, auf die nicht dargestellte Aufwickelrolle aufgewickelt werden. Das Aufwickeln der Einlegefolienbahnen 7, 8 zusammen mit der erfindungsgemäßen Verpackungsfolie 1 erfolgt dabei derart, dass auf jeder Folienbahn 2, 3 außerhalb des Überlappungsbereiches 4, wie in Figur 1 gut erkennbar, eine Einlegefolienbahn 7, 8 aufliegt. Die weitere Abwickelrolle 31 ist, wie in der Figur 3 erkennbar, an dem weiteren Gestell 19 gehalten, welches auch die Komponenten der Heißsiegeleinrichtung 19 trägt.

Es sind weiterhin in den Figuren nicht dargestellte Führungsmittel vorgesehen, mit welchen die beiden Folienbahnen 2, 3 sowie die Einlegefolienbahnen 7, 8 außenseitig geführt werden.

Darüber hinaus ist vorgesehen, dass die Abwickelrollen 11, 12, die Führungsrollen 15, die Aufwickelrolle sowie die weitere Abwickelrolle 31 seitlich positionierbar an den Gestellen 10 der Vorrichtung 9 gehalten sind. Hierdurch kann insbesondere die Position der Folienbahnen 2, 3 zueinander und somit die Breite des Überlappungsbereiches sowie die Position der Einlegefolienbahnen 7, 8 relativ zu dem hergestellten Verpackungsfolie 1 eingestellt werden.

Schließlich umfasst die Vorrichtung 9 eine Fördereinrichtung, die ausgebildet ist, um die Folienbahnen 2, 3 durch die Vorrichtung 9 zu fördern. Die Fördereinrichtung umfasst zwei Antriebselemente 33, 34, von denen jeweils eines den Abwickelrollen 11, 12 zugeordnet und ausgebildet ist, um diese in eine vorgegebene Drehrichtung anzutreiben. In gleicher Weise ist der weiteren Abwickelrolle 31 für die Einlegefolienvorratsrolle 32 ein weiteres Antriebselement 35 der Fördereinrichtung zugeordnet, über welches die beiden Einlegefolienbahnen 7, 8 von der Einlegefolienvorratsrolle 32 abwickelbar sind. Auch die Führungsrollen 15 sind zur Förderung der Folienbahnen 2, 3 und zum Antrieb der Teflonbänder 25 der Heißsiegeleinrichtung 19 durch die Vorrichtung 9 teilweise mit einem Antrieb versehen und zwar mit einem servomotorischen Antrieb, mit dem die Geschwindigkeit geregelt werden kann. Diejenigen Führungsrollen 15 der Heißsiegeleinrichtung 19, die einen Antrieb aufweisen, sind in den Figuren mit einem "M" gekennzeichnet.

Alternativ zu dem dargestellten Ausführungsbeispiel kann auch eine Vorrichtung zum Einsatz kommen, die anstelle der Heißsiegeleinrichtung 19 der vorstehend beschriebenen Vorrichtung 9 eine Ultraschall-Siegeleinrichtung aufweist, die ausgebildet ist, um eine Siegelnaht 6 mittels Ultraschallwellen zu erzeugen. Abgesehen von der unterschiedlichen Siegeleinrichtung kann die Vorrichtung in ihrem Aufbau dann mit der vorstehend beschriebenen Vorrichtung 9 übereinstimmen.

Im Betrieb der Vorrichtung 9 werden zur Herstellung der in den Figuren 1 und 2 erkennbaren erfindungsgemäßen Verpackungsfolie 1 von den beiden Abwickelrollen 11, 12 die beiden Folienbahnen 2, 3 abgewickelt. Die Folienbahnen 2, 3 werden mittels der Führungsrollen 15 derart parallel durch die Vorrichtung 9 geführt, dass sie in ihrem einander zugewandten inneren Randbereichen 2a, 3a unter Bildung des Überlappungsbereiches 4 aufeinanderlegbar sind.

Die beiden Folienbahnen 2, 3 werden in dem Überlappungsbereich 4 miteinander verbunden.

Hierzu wird zunächst auf den inneren Randbereich 2a der unteren Folienbahn 2 ein Klebematerial aufgebracht. Konkret wird mittels des Sprühkopfes 17a der Klebestation 17 ein Klebematerial auf die untere Folienbahn 2 aufgesprüht. Das Klebematerial wird dabei auf die untere Folienbahn 2 aufgesprüht, während diese an der Klebestation 17 vorbeigefördert wird. Die Folienbahn 2 kann dabei mit hoher Geschwindigkeit gefördert werden, während das Klebematerial zur Herstellung des Klebestreifens 5 aufgesprüht wird. Bei dem dargestellten Ausführungsbeispiel wird die Folienbahn 2 mit einer Geschwindigkeit von 150 Metern pro Minute an dem Sprühköpfen 17a vorbeigefördert.

Nach dem Aufbringen des Klebematerials werden die inneren Randbereiche 2a, 3a der beiden Folienbahnen 2, 3 unter Bildung des Überlappungsbereiches 4 aufeinandergelegt, wie insbesondere in der Schnittdarstellung in Figur 3 zu erkennen ist. Konkret werden die beiden Folienbahnen 2, 3 im Bereich des Pressspaltes aufeinandergelegt, welcher zwischen den beiden Pressrollen 20, 21 der Pressstation 18 gebildet wird. Die obere Folienbahn 3 wird hierzu über die obere Pressrolle 20 in dem Pressspalt auf die untere Folienbahn 2 gelegt. Die beiden Folienbahnen 2, 3 werden mittels der beiden Pressrollen 20, 21 im Überlappungsbereich 4 verpresst.

Anschließend gelangen die beiden nunmehr über den Klebestreifen 5 bereits miteinander verbundenen Folienbahnen 2, 3 über zwei weitere Führungsrollen 15 in die Heißsiegeleinrichtung 19 der Vorrichtung 9. Dort werden die beiden Folienbahnen 2, 3 zur Herstellung der Siegelnaht 6 zunächst entlang der durch die von den beiden einander gegenüberliegenden Abschnitte der Teflonbänder 25 definierten Heizstrecke 26 von beiden Seiten lokal erwärmt, und zwar über einen Bereich, der sich in Querrichtung der Folienbahnen 2, 3 über etwa 4 mm erstreckt. Dabei ist die Anordnung der Teflonbänder 25 derart gewählt und werden die Folienbahnen 2, 3 derart durch die Heißsiegeleinrichtung 19 gefördert, dass sich der lokal erwärmte Bereich einer Quererstreckung von etwa 5 mm in dieser Richtung bis zu der benachbarten Randkante 2b der unteren Folienbahn 2 (vgl. Figur 1) erstreckt, damit sich die herzustellende Siegelnaht 6 in Querrichtung der Folienbahnen 2, 3 bis an diese benachbarte Randkante 2b erstreckt und eine besonders hohe Dichtheit gewährleistet wird.

Während die bereits durch den Klebestreifen 5 miteinander verbundenen Folienbahnen 2, 3 die Heizstrecke 25 durchlaufen und erwärmt werden, werden sie über die beiderseitig entsprechend angeordneten Schweißbalken 24 gegeneinander gedrücktDie Teflonbänder 24 laufen dabei mit den durch die Heizstrecke 26 geförderten Folienbahnen 2, 3 mit, da sie durch diejenigen Führungsrollen 15, die mit einem Antrieb versehen sind, ebenfalls angetrieben werden. Die Fördergeschwindigkeit der Teflonbänder 25 ist dabei an die Fördergeschwindigkeit der Folienbahnen 2, 3 angepasst. Eine exakte Übereinstimmung ist nicht erforderlich sondern es kann auch eine leichte Abweichung der Geschwindigkeiten vorliegen.

Anschließend werden die entlang der Heizstrecke 25 erwärmten Folienbahnen 2, 3 in dem Überlappungsbereich nochmals miteinander verpresst und zwar in dem Pressspalt der der Heizstrecke 25 nachgeordneten weiteren Pressstation 18.

Sie gelangen dann in die Kühlstation 23, wo sie entlang der durch die einander gegenüberliegenden Abschnitte der im Betrieb gekühlten Teflonbänder 25 definierten Kühlstrecke 29 lokal gekühlt werden und zwar zumindest in demjenigen Bereich, in dem zuvor die Erwärmung erfolgte. In Analogie zu der Heizstation 22 laufen die Teflonbänder 25 der Kühlstation 23 dabei mit den durch die Kühlstrecke 29 geförderten Folienbahnen 2, 3 mit, wobei die Fördergeschwindigkeiten auch hier aneinander angepasst sind.

Die Folienbahnen 2, 3 können, während die Erwärmung, das Verpressen und die anschließende Kühlung in der Heißsiegeleinrichtung 19 erfolgt, mit hoher Geschwindigkeit gefördert werden. Bei dem dargestellten Ausführungsbeispiel beträgt die Fördergeschwindigkeit, wie vorstehend bereits erwähnt, 150 Meter pro Minute.

Da in dem Überlappungsbereich 4 eine Schicht aus PP und eine Schicht aus Metallocen-PE aufeinander liegen, wird durch die Aufbringung von Wärme und Druck sowie die anschließende Kühlung eine peelbare Siegelnaht 6 durch Heißsiegeln hergestellt.

Im Ergebnis wird die in den Figuren 1 und 2 erkennbare erfindungsgemäße Verpackungsfolie 1 erhalten, welche zwei Folienbahnen 2, 3 umfasst, die unter Bildung eines Überlappungsbereiches 4 teilweise aufeinanderliegen und in dem Überlappungsbereich 4 mit einem Klebestreifen 5 und eine peelbare Siegelnaht 6 miteinander verbunden sind.

Die auf die vorgenannte Weise hergestellte erfindungsgemäße Verpackungsfolie 1 wird abschließend mittels der in den Figuren 3 und 4 nicht dargestellten Aufwickelrolle aufgewickelt. Zusammen mit der erfindungsgemäßen Verpackungsfolie 1 werden die beiden Einlegefolienstreifen 7, 8, wie in der Figur 1 erkennbar, aufgewickelt. Die Einlegefolienbahnen 7, 8 werden von der der Heißsiegeleinrichtung 19 nachgeordneten Einlegefolienvorratsrolle 32 abgewickelt.

Die erhaltene Verpackungsfolienrolle kann platzsparend gelagert und kostengünstig weiter transportiert werden.

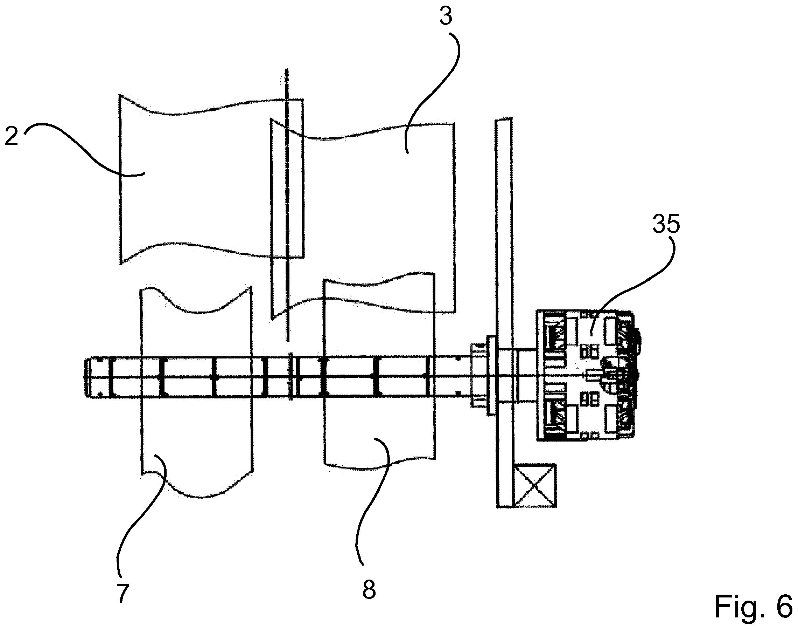

Zur Herstellung einer Verpackung, beispielsweise eines Schlauchbeutels für ein Produkt aus dem Lebensmittelbereich, vorliegend ein Stück Käse, wird mit einer in den Figuren nicht dargestellten Verpackungsmaschine in an sich bekannter Weise die auf die vorgenannte Weise hergestellte erfindungsgemäße Verpackungsfolie 1 von der Verpackungsfolienrolle abgewickelt. Es wird jeweils ein Stück Käse auf einen Abschnitt der Verpackungsfolie 1 entsprechender Größe gelegt, wobei darauf geachtet wird, dass der Überlappungsbereich 4 der erfindungsgemäßen Verpackungsfolie 1 im Bereich der späteren Oberseite der herzustellenden Verpackung liegt und dass die Schicht aus siegelbaren Material der beiden Folienstreifen 2, 3 der Verpackungsfolie 1, also die Unterseite der beiden Folienstreifen 2, 3 dem Stück Käse zugewandt ist. Diese Seiten bilden folglich die Innenseite der herzustellenden Verpackung. Die Verpackungsfolie 1 wird um den Käse herumgefaltet und es werden entlang zweier Quernähte sowie einer Längsnaht, entlang derer die beiden freien Randbereiche der Verpackungsfolie 1 miteinander verbunden werden, durch Aufbringen von Druck und Erhitzen Siegelnähte hergestellt, um eine umseitig verschlossene Schlauchbeutel-Verpackung für das Stück Käse zu erhalten. Eine entsprechende Schlauchbeutel-Verpackung 36 mit zwei Quernähten 37, 38 ist in der Figur 6 dargestellt. Die Längsnaht, welche in dieser Figur nicht zu erkennen ist, befindet sich auf der Rückseite der Schlauchbeutel-Verpackung 36.

Die Verpackung 36 kann von einem Benutzer zur Entnahme des Stücks Käse komfortabel geöffnet werden, indem der als Grifflasche dienende freie Abschnitt des Randbereiches 3a der oberen Folienbahn 3 gegriffen und die obere Folienbahn 3 in dem Überlappungsbereich 4 von der unteren Folienbahn 2 abgezogen wird. Infolgedessen wird die obere Folienbahn von dem Klebestreifen 5 abgehoben und die Siegelnaht 6 wird durchbrochen. Der Benutzer kann das Stück Käse entnehmen, sich einen Teil hiervon abschneiden und anschließend das Stück Käse durch die hergestellte Öffnung zurück in die Verpackung 36 legen. Abschließend drückt er in dem Überlappungsbereich 4 die beiden Folienbahnen 2, 3 wieder aufeinander. Hierdurch wird die obere Folienbahn 3 mit dem Klebestreifen 5 in Kontakt gebracht und die Verpackung 36 so zuverlässig wieder verschlossen.

### Bezugszeichenliste

- 1: Verpackungsfolie
- 2: Folienbahn (untere)
- 3: Folienbahn (obere)
- 4: Überlappungsbereich
- 5: Klebestreifen
- 6: Siegelnaht
- 7: Einlegestreifen
- 8: Einlegestreifen
- 9: Vorrichtung
- 10: Gestell
- 11: Abwickelrolle
- 12: Abwickelrolle
- 13: Folienvorratsrolle
- 14: Folienvorratsrolle
- 15: Führungsrollen
- 16: Verbindungseinrichtung
- 17: Klebestation
- 17a: Sprühkopf
- 18: Pressstation
- 19: Heißsiegeleinrichtung
- 20: Pressrolle
- 21: Pressrolle
- 22: Heizstation
- 23: Kühlstation
- 24: Schweißbalken
- 25: Teflonbänder
- 26: Heizstrecke
- 27: Pneumatikzylinder
- 28: Zwischentrieb
- 29: Kühlstrecke
- 30: Kühlbalken
- 31: Abwickelrolle
- 32: Einlegefolienvorratsrolle
- 33: Antriebselement
- 34: Antriebselement
- 35: weiteres Antriebselement

## Patentansprüche

1. Verpackungsfolie (1), insbesondere zur Herstellung von Schlauchbeuteln (36), umfassend zwei ein- oder mehrschichtige Folienbahnen (2,3), die parallel zueinander ausgerichtet und derart angeordnet sind, dass ihre einander zugewandten inneren Randbereiche (2a, 3a) unter Bildung eines Überlappungsbereiches (4) aufeinander liegen, wobei die beiden Folienbahnen (2, 3) in dem Überlappungsbereich (4) lösbar miteinander verbunden sind,
**dadurch gekennzeichnet, dass**
die beiden Folienbahnen (2,3) durch einen insbesondere durch Aufsprühen hergestellten Klebestreifen (5) aus einem Hotmelt und eine Siegelnaht (6) miteinander verbunden sind, die sich in dem Überlappungsbereich (4) parallel zueinander in einer Längsrichtung der Folienbahnen (2, 3) erstrecken und nebeneinanderliegend angeordnet sind.

2. Verpackungsfolie (1) nach Anspruch 1, **dadurch gekennzeichnet, dass** es sich bei der Siegelnaht (6) um eine durch Aufbringung von Wärme und Druck auf die Folienbahnen (2,3) hergestellte Siegelnaht (6) handelt, insbesondere um eine durch nacheinander erfolgte Aufbringung von zunächst Wärme und dann Druck auf die Folienbahnen (4) hergestellte Siegelnaht (6) handelt, bevorzugt um eine durch nacheinander erfolgte Aufbringung von zunächst Wärme, dann Druck auf die Folienbahnen (2, 3) und anschließende Kühlung der Folienbahnen (2, 3) hergestellte Siegelnaht handelt.

3. Verpackungsfolie (1) nach Anspruch 1 oder 2, **dadurch gekennzeichnet, dass** es sich bei der Siegelnaht (6) um eine durch Aufbringung von Ultraschallwellen und Druck auf die Folienbahnen (2, 3) hergestellte Siegelnaht (6) handelt, insbesondere um eine durch gleichzeitige Aufbringung von Ultraschallwellen und Druck auf die Folienbahnen (2, 3) hergestellte Siegelnaht (6) handelt.

4. Verpackungsfolie (1) nach einem der vorhergehenden Ansprüche, **dadurch gekennzeichnet, dass** die Siegelnaht (6) von einer benachbarten Randkante (2b) einer Folienbahn (2) einen Abstand von maximal 0,2 mm aufweist, sich bevorzugt bis zu einer benachbarten Randkante (2b) einer Folienbahn (2) erstreckt und/oder dass die Siegelnaht (6) peelbar ist und/oder der Klebestreifen (5) von einer benachbarten Randkante (3b) einer Folienbahn (3) einen Abstand von 1 cm bis 4 cm, insbesondere von 1,5 cm bis 3 cm, bevorzugt von 1,8 cm bis 2,2 cm aufweist.

5. Verpackungsfolie (1) nach einem der vorhergehenden Ansprüche, **dadurch gekennzeichnet, dass** der Klebestreifen (5) eine Dicke von 20 µm bis 100 µm, insbesondere von 40 µm bis 90 µm, bevorzugt von 75 µm bis 85 µm aufweist und/oder dass der Klebestreifen (5) und/oder die Siegelnaht (6) eine Breite von 3 mm bis 10 mm, insbesondere von 4 mm bis 7 mm, bevorzugt von 4,5 mm bis 5,5 mm aufweist und/oder dass der Überlappungsbereich (4) eine Breite von 3 cm bis 7 cm, insbesondere von 3,5 cm bis 6 cm, bevorzugt von 4 cm bis 5 cm aufweist.

6. Verfahren zur Herstellung einer Verpackungsfolie (1), insbesondere nach einem der vorhergehenden Ansprüche, umfassend die Schritte
- zwei ein- oder mehrschichtige Folienbahnen (2, 3) werden auf zwei parallel zueinander angeordneten Folienvorratsrollen (13, 14) bereitgestellt,
- die Folienbahnen (2, 3) werden abgewickelt und mittels Führungsrollen (15) derart geführt, dass sie in ihren einander zugewandten inneren Randbereichen (2a, 3a) unter Bildung eines Überlappungsbereiches (4) aufeinandergelegt werden,
- die beiden Folienbahnen (2, 3) werden in dem Überlappungsbereich (4) miteinander verbunden,
**dadurch gekennzeichnet, dass** die beiden Folienbahnen (2, 3) in dem Überlappungsbereich (4) miteinander verbunden werden, indem
- auf einen inneren Randbereich (2a) einer der Folienbahnen (2), insbesondere der unteren Folienbahn (2), ein Klebestreifen (5) aufgebracht, insbesondere aufgesprüht wird, der sich in Längsrichtung der Folienbahnen (2, 3) erstreckt,
- die inneren Randbereiche (2a, 3a) der beiden Folienbahnen (2, 3) anschließend unter Bildung des Überlappungsbereiches (4) aufeinandergelegt und die Folienbahnen (2, 3) im Überlappungsbereich (4) gegeneinander verpresst werden,
- anschließend durch Aufbringung von Wärme und Druck oder durch Aufbringung von Ultraschall und Druck auf die Folienbahnen (2, 3) in dem Überlappungsbereich (4) eine sich in Längsrichtung der Folienbahnen (2, 3) erstreckende, parallel zu dem Klebestreifen (5) orientierte, insbesondere peelbare Siegelnaht (6) hergestellt wird.

7. Verfahren nach Anspruch 6, **dadurch gekennzeichnet, dass** die miteinander verbundenen Folienbahnen (2, 3) auf eine Aufwickelrolle aufgewickelt werden, wobei insbesondere zusammen mit den verbundenen Folienbahnen (2, 3) zwei Einlegefolienbahnen (7, 8) aufgewickelt werden, von denen jeweils eine außerhalb des Überlappungsbereiches (4) auf einer der Folienbahnen (2, 3) positioniert wird.

8. Vorrichtung (9) zur Herstellung einer Verpackungsfolie (1), insbesondere nach einem der Ansprüche 1 bis 5, mit einer Heißsiegeleinrichtung (19), die ein Gestell (10), an dem eine Mehrzahl von Führungsrollen (15) drehbar gehalten ist, und eine Heizstation (22), eine Pressstation (18) und eine Kühlstation (23) umfasst, wobei die Heizstation (22) Heizmittel, die insbesondere wenigsten zwei Schweißbalken (24) umfassen, sowie zwei geschlossene Teflonbänder (25), die jeweils über mehrere, bevorzugt jeweils über vier der Führungsrollen (15) gelegt und bevorzugt mit den Heizmitteln in Kontakt bringbar sindaufweist, und die Kühlstation (23) Kühlmittel, die insbesondere wenigsten zwei Kühlbalken (30) umfassen, sowie wenigsten zwei geschlossene Teflonbänder (25), die jeweils über mehrere, bevorzugt jeweils über vier der Führungsrollen (15) gelegt und bevorzugt mit den Kühlmitteln in Kontakt bringbar sindaufweist, wobei diejenigen Führungsrollen (15), um welche die Teflonbänder (25) der Heizstation (22) gelegt sind derart angeordnet sind, dass ein Abschnitt des ersten Teflonbandes (25) der Heizstation (22) und ein Abschnitt des zweiten Teflonbandes (25) der Heizstation (22) über eine Strecke vorgegebener Länge parallel zueinander verlaufen, so dass zwischen den beiden parallelen Abschnitten eine Heizstrecke (26) vorgegebener Länge definiert wird, und wobei diejenigen Führungsrollen (15), um welche die Teflonbänder (25) der Kühlstation (23) gelegt sind derart angeordnet sind, dass ein Abschnitt des ersten Teflonbandes (25) der Kühlstation (23) und ein Abschnitt des zweiten Teflonbandes (25) der Kühlstation (23) über eine Strecke vorgegebener Länge parallel zueinander verlaufen, so dass zwischen den beiden parallelen Abschnitten eine Kühlstrecke (29) vorgegebener Länge definiert wird, und wobei die Pressstation (18) zwei unter Bildung eines Pressspaltes parallel zueinander angeordneten Pressrollen (20, 21) umfasst.

9. Vorrichtung (9) nach Anspruch 8, **dadurch gekennzeichnet, dass** von denjenigen Führungsrollen (15), um die jeweils ein Teflonband (25) der Heizstation (22) gelegt ist und/oder von denjenigen Führungsrollen (15), um die jeweils ein Teflonband (25) der Kühlstation (23) gelegt ist wenigstens eine Führungsrolle (15) direkt oder indirekt antreibbar ist.

10. Vorrichtung (9) nach Anspruch 8 oder 9, **dadurch gekennzeichnet, dass** die Vorrichtung (9) weiterhin zwei an dem Gestell (10) und/oder an einem weiteren Gestell (10) parallel zueinander gehaltene Abwickelrollen (11, 12) umfasst, an denen jeweils eine Folienvorratsrolle (13, 14) mit einer ein- oder mehrschichtige Folienbahn (2, 3) abwickelbar gehalten werden kann, sowie mehrere an dem Gestell (10) und/oder einem weiteren Gestell (10) gehaltene weitere Führungsrollen (15), die ausgebildet und angeordnet sind, um wenigstens eine Folienbahn (2, 3) durch die Vorrichtung (9) zu führen, wobei die Abwickelrollen (11, 12) und die weiteren Führungsrollen (15) insbesondere derart angeordnet sind, dass zwei Folienbahnen (2, 3) parallel zueinander durch die Vorrichtung (9) geführt werden und die beiden Folienbahnen (2, 3) in ihren einander zugewandten inneren Randbereichen (2a, 3a) unter Bildung eines Überlappungsbereiches (4) aufeinander gelegt werden können, und wobei die Heißsiegeleinrichtung (19) den Abwickelrollen (11, 12) nachgeordnet ist.

11. Vorrichtung (9) nach einem der Ansprüche 8 bis 10, **dadurch gekennzeichnet, dass** die Vorrichtung (9) weiterhin eine bevorzugt zwischen den Abwickelrollen (11, 12) und der Heißsiegeleinrichtung (19) angeordnete Klebestation (17) umfasst, die ausgebildet ist, um einen Klebestreifen (5) aus einem Hotmelt auf eine durch die Vorrichtung (9) geführte Folienbahn (2) aufzubringen, insbesondere aufzusprühen, wobei die Klebestation (17) bevorzugt einen Sprühkopf (17a) zum Aufsprühen von Klebematerial umfasst, der insbesondere bewegbar an dem Gestell (10) bzw. dem weiteren Gestell (10) gehalten ist.

12. Vorrichtung (9) nach einem der Ansprüche 8 bis 11, **dadurch gekennzeichnet, dass** die Vorrichtung (9) weiterhin eine bevorzugt zwischen der Klebestation (17) und der Heißsiegeleinrichtung (19) angeordnete weitere Pressstation (18) mit zwei unter Bildung eines Pressspaltes parallel zueinander angeordneten Pressrollen (20, 21) umfasst und/oder die Vorrichtung (9) weiterhin eine Fördereinrichtung zur Förderung von wenigstens einer Folienbahn (2, 3) durch die Vorrichtung (9) umfasst, die insbesondere den Abwickelrollen (11, 12) und/oder den Führungsrollen (15) zugeordnete Antriebseinheiten umfasst, durch welche die Rollen in eine vorgegebene Drehrichtung angetrieben werden.

13. Vorrichtung (9) nach einem der Ansprüche Anspruch 8 bis 12, **dadurch gekennzeichnet, dass** eine der Heißsiegeleinrichtung (19) nachgeordnete Aufwickelrolle vorgesehen ist, welche derart ausgebildet und angeordnet ist, dass wenigstens eine durch die Vorrichtung (9) geförderte Folienbahn (2, 3) auf diese aufwickelbar ist, und insbesondere eine weitere Abwickelrolle (31) zur Aufnahme einer Einlegefolienvorratsrolle (32), auf welcher axial beabstandet zwei Einlegefolienbahnen (7, 8) aus einer ein- oder mehrschichtigen Folie aufgerollt sind, vorgesehen ist, wobei die weitere Abwickelrolle (31) derart angeordnet ist, dass Einlegefolienbahnen (7, 8) zusammen mit wenigstens einer durch die Vorrichtung (9) geförderten Folienbahn (2, 3) auf die Aufwickelrolle aufwickelbar sind.

14. Vorrichtung (9) nach einem der Ansprüche 8 bis 13, **dadurch gekennzeichnet, dass** Führungsmittel zum außenseitigen Führen von wenigstens einer durch die Vorrichtung (9) geförderten Folienbahn (2, 3) vorgesehen sind und/oder dass die beiden Pressrollen (20, 21) der Pressstation (18) und/oder der weiteren Pressstation (18) zur Einstellung einer Pressspaltdicke an dem Gestell (10) bzw. dem weiteren Gestell (10) aufeinander zu und voneinander weg bewegbar gehalten sind.

15. Vorrichtung (9) nach einem der Ansprüche 8 bis 14, **dadurch gekennzeichnet, dass** die Abwickelrollen (11, 12) und/oder die Führungsrollen (15) und/oder die Aufwickelrolle und/oder die weitere Abwickelrolle (31) seitlich positionierbar an dem Gestell (10) bzw. dem weiteren Gestell (10) gehalten sind.

16. Vorrichtung (9) zur Herstellung einer Verpackungsfolie (1), insbesondere nach einem der Ansprüche 1 bis 5, umfassend
- zwei an einem Gestell (10) parallel zueinander gehaltene Abwickelrollen (11, 12), an denen jeweils eine Folienvorratsrolle (13, 14) mit einer ein- oder mehrschichtige Folienbahn (2, 3) abwickelbar gehalten werden kann, sowie mehrere an dem Gestell (10) gehaltene Führungsrollen (15), die ausgebildet und angeordnet sind, um wenigstens eine Folienbahn (2, 3) durch die Vorrichtung (9) zu führen, wobei die Abwickelrollen (11, 12) und die Führungsrollen (15) insbesondere derart angeordnet sind, dass zwei Folienbahnen (2, 3) parallel zueinander durch die Vorrichtung (9) geführt werden und die beiden Folienbahnen (2, 3) in ihren einander zugewandten inneren Randbereichen (2a, 3a) unter Bildung eines Überlappungsbereiches (4) aufeinander gelegt werden können,
- eine den Abwickelrollen nachgeordnete Klebestation (17), die ausgebildet ist, um einen Klebestreifen (5) aus einem Hotmelt auf eine durch die Vorrichtung (9) geführte Folienbahn (2) aufzubringen, insbesondere aufzusprühen, wobei die Klebestation (17) bevorzugt einen Sprühkopf (17a) zum Aufsprühen von Klebematerial umfasst, der insbesondere bewegbar an dem Gestell (10) gehalten ist,
- eine der Klebestation nachgeordnete Pressstation (18) mit zwei unter Bildung eines Pressspaltes parallel zueinander angeordneten Pressrollen (20, 21), und
- eine der Pressstation (18) nachgeordnete Ultraschall-Siegeleinrichtung, die bevorzugt wenigstens eine drehbar gelagerte, rollenförmige Ultraschallsonde und eine ebenfalls drehbar gelagerte Pressrolle umfasst, die unter Bildung eines Pressspaltes parallel zueinander angeordnet sind.

## Claims

1. Packaging film (1), in particular for the production of tubular bags (36), comprising two single-layer or multi-layer film strips (2, 3) which are aligned parallel to one another and arranged such that their inner edge regions (2a, 3a) facing one to another lie one on top of the other to form an overlap region (4), the two film strips (2, 3) being detachably connected to one another in the overlap region (4),
**characterized in that**
the two film strips (2, 3) are joined together by an adhesive strip (5) made in particular by spraying and consisting of a hotmelt and a sealing seam (6) which extend in the overlap region (4) parallel to one another in a longitudinal direction of the film strips (2, 3) and are arranged lying next to one another.

2. Packaging film (1) according to claim 1, **characterized in that** the sealing seam (6) is a sealing seam (6) produced by applying heat and pressure to the film strips (2, 3), in particular a sealing seam (6) produced by successively applying first heat and then pressure to the film strips (4), preferably a sealing seam produced by successively applying first heat, then pressure to the film strips (2, 3) and subsequently cooling the film strips (2, 3).

3. Packaging film (1) according to claim 1 or 2, **characterized in that** the sealing seam (6) is a sealing seam (6) produced by applying ultrasonic waves and pressure to the film strips (2, 3), in particular a sealing seam (6) produced by simultaneously applying ultrasonic waves and pressure to the film strips (2, 3).

4. Packaging film (1) according to one of the preceding claims, **characterized in that** the sealing seam (6) has a maximum distance of 0.2 mm from an adjacent outer edge (2b) of a film strip (2), preferably extends as far as an adjacent outer edge (2b) of a film strip (2) and/or that the sealing seam (6) can be peelable and/or the adhesive strip (5) has a distance of 1 cm to 4 cm, in particular from 1.5 cm to 3 cm, preferably from 1.8 cm to 2.2 cm from an adjacent outer edge (3b) of a film strip (3).

5. Packaging film (1) according to one of the preceding claims, **characterized in that** the adhesive strip (5) has a thickness of 20 µm to 100 µm, in particular of 40 µm to 90 µm, preferably of 75 µm to 85 µm and/or that the adhesive strip (5) and/or the sealing seam (6) has a width of 3 mm to 10 mm, in particular from 4 mm to 7 mm, preferably from 4.5 mm to 5.5 mm and/or that the overlap area (4) has a width of 3 cm to 7 cm, in particular from 3.5 cm to 6 cm, preferably from 4 cm to 5 cm.

6. Method for producing a packaging film (1), in particular according to any of the preceding claims, comprising the steps
- two single- or multi-layer film strips (2, 3) are provided on two film supply rolls (13, 14) arranged parallel to each other,
- the film strips (2, 3) are unwound and guided by means of guide rollers (15) such that they are laid one on top of the other in their inner edge regions (2a, 3a), facing one another such as to form an overlap region (4),
- the two film strips (2, 3) are connected to one another in the overlap region (4),
**characterized in that** the two film strips (2, 3) are connected to one another in the overlap region (4) by
- applying an adhesive strip (5) to an inner edge region (2a) of one of the film strips (2), in particular the lower film strip (2), in particular sprayed on, which extends in the longitudinal direction of the film strips (2, 3),
- subsequently lying the inner edge regions (2a, 3a) of the two film strips (2, 3) one on top of the other to form the overlap region (4) and pressing the film strips (2, 3) together in the overlap region (4),
- subsequently producing a sealing seam (6) extending in the longitudinal direction of the film strips (2, 3) and being oriented parallel to the adhesive strip (5), in particular peelable, by applying heat and pressure or by applying ultrasound and pressure to the film strips (2, 3) in the overlap region (4).

7. Method according to claim 6, **characterized in that** the interconnected film strips (2, 3) are wound up onto a winding up roller, in particular two insertion film strips (7, 8) being wound together with the connected film strips (2, 3), one of which is positioned outside the overlap region (4) on one of the film strips (2, 3) respecitvely.

8. Device (9) for producing a packaging film (1), in particular according to one of claims 1 to 5, having a heat-sealing device (19) which comprises a frame (10) on which a plurality of guide rollers (15) is rotatably held, and a heating station (22), a pressing station (18) and a cooling station (23), the heating station (22) comprising heating means, in particular at least two sealing bars (24) and two closed Teflon strips (25), each of which is laid over several, preferably laid in each case over four of the guide rollers (15) and preferably able to be brought in contact with the heating means, and the cooling station (23) having cooling means, which in particular comprise at least two cooling bars (30) and at least two closed Teflon strips (25), each of which is laid over several, preferably in each case over four of the guide rollers (15) and preferably can be brought in contact with the cooling means, wherein those guide rollers (15), around which the Teflon strips (25) of the heating station (22) are laid, are arranged such that a portion of the first Teflon strips (25) of the heating station (22) and a portion of the second Teflon strips (25) of the heating station (22) extend parallel to one another over a distance of predetermined length, so that a heating distance (26) of predetermined length is defined between the two parallel portions, and wherein those guide rollers (15) around which the Teflon strips (25) of the cooling station (23) are laid, are arranged such that a portion of the first Teflon strips (25) of the cooling station (23) and a portion of the second Teflon strips (25) of the cooling station (23) extend parallel to one another over a distance of predetermined length so that a cooling distance (29) of predetermined length is defined between the two parallel portions, and wherein the pressing station (18) comprises two pressing rollers (20, 21) arranged parallel to one another to form a pressing gap.

9. Device (9) according to claim 8, **characterized in that** of those guide rollers (15), around which a Teflon strip (25) of the heating station (22) is respectively laid, and/or of those guide rollers (15), around which a Teflon strip (25) of the cooling station (23) is respectively laid, at least one guide roller (15) can be driven directly or indirectly.

10. Device (9) according to claim 8 or 9, **characterized in that** the device (9) further comprises two unwinding rollers (11, 12) held parallel to one another on the frame (10) and/or on a further frame (10), on each of which a film supply roller (13, 14) with a single- or multi-layer film strip (2, 3) can be held unwindably, and several further guide rollers (15) held on the frame (10) and/or a further frame (10), which are formed and arranged in order to guide at least one film strip (2, 3) through the device (9), wherein the unwinding rollers (11, 12) and the further guide rollers (15) are arranged in particular such that two film strips (2, 3) are guided parallel to one another through the device (9) and the two film strips (2, 3) can be laid on top of one another in their inner edge regions (2a, 3a) facing one to another to form an overlap region (4), and wherein the heat-sealing device (19) is arranged downstream of the unwinding rollers (11, 12).

11. Device (9) according to one of claims 8 to 10, **characterized in that** the device (9) further comprises an adhesion station (17) preferably arranged between the unwinding rollers (11, 12) and the heat-sealing device (19), which is formed for applying, in particular spraying, an adhesive strip (5) of a hot melt onto a film strip (2) guided through the device (9), the adhesion station (17) preferably comprising a spray head (17a) for spraying adhesive material, which in particular is movably held on the frame (10) or on the further frame (10).

12. Device (9) according to one of claims 8 to 11, **characterized in that** the device (9) further comprises a further pressing station (18) preferably arranged between the adhesion station (17) and the heat-sealing device (19) with two pressing rollers (20, 21) arranged parallel to one another forming a pressing gap and/or the device (9) further comprises a conveying device for conveying at least one film strip (2, 3) through the device (9), which comprises in particular drive units associated with the unwinding rollers (11, 12) and/or the guide rollers (15), by means of which the rollers are driven in a predetermined direction of rotation.

13. Device (9) according to one of the claims 8 to 12, **characterized in that** a winding roller is provided downstream of the heat-sealing device (19), which is designed and arranged such that at least one film strip (2, 3) conveyed by the device (9) can be wound onto it, and in particular a further unwinding roller (31) for receiving an insert film supply roller (32), on which two insertion film strips (7, 8) of a single-layer or multi-layer film are axially spaced apart, wherein the further unwinding roller (31) is arranged such that insertion film strips (7, 8) can be wound onto the winding roller together with at least one film strip (2, 3) conveyed by the device (9).

14. Device (9) according to one of claims 8 to 13, **characterized in that** guide means are provided for externally guiding of at least one film strip (2, 3) conveyed through the device (9) and/or that the two pressing rollers (20, 21) of the pressing station (18) and/or of the further pressing station (18) are held movable towards and away from one another on the frame (10) or the further frame (10) for setting a pressing gap thickness.

15. Device (9) according to one of claims 8 to 14, **characterized in that** the unwinding rollers (11, 12) and/or the guide rollers (15) and/or the winding roller and/or the further unwinding roller (31) are held laterally positionably on the frame (10) or the further frame (10).

16. Device (9) for producing a packaging film (1), in particular according to one of claims 1 to 5, comprising
- two unwinding rollers (11, 12) held parallel to each other on a frame (10), on each of which a film supply roller (13, 14) with a single-layer or multi-layer film strip (2, 3) can be unwoundably held, and a plurality of guide rollers (15) held on the frame (10), which guide rollers are designed and arranged to guide at least one film strip (2, 3) through the device (9), the unwinding rollers (11, 12) and the guide rollers (15) being arranged in particular such that two film strips (2, 3) are guided parallel to one another through the device (9) and the two film strips (2, 3) can be laid on top of one another in their inner edge regions (2a, 3a) facing one to another, forming an overlap region (4),
- an adhesion station (17) arranged downstream of the unwinding rollers, which is designed to apply, in particular to spray, an adhesive strip (5) of a hot melt onto a film strip (2) guided through the device (9), wherein the adhesion station (17) preferably comprises a spray head (17a) for spraying on adhesive material, which is held in particular movably on the frame (10),
- a pressing station (18) arranged downstream of the adhesion station with two pressing rollers (20, 21) arranged parallel to one another to form a pressing gap, and
- an ultrasonic sealing device downstream of the pressing station (18), which preferably comprises at least one rotatably mounted, roller-shaped ultrasonic probe and a likewise rotatably mounted pressing roller, which are arranged parallel to one another to form a press gap.

## Revendications

1. Film d'emballage (1), en particulier pour la fabrication de sachets tubulaires (36), comprenant deux bandes de film monocouche ou multicouche (2, 3) qui sont alignées parallèlement l'une à l'autre et disposées de telle sorte que leurs zones périphériques intérieures tournées l'une vers l'autre (2a, 3a) se superposent en formant une zone de chevauchement (4), les deux bandes de film (2, 3) étant reliées l'une à l'autre de manière amovible dans la zone de chevauchement (4),
**caractérisé en ce que**
les deux bandes de film (2, 3) sont reliées entre elles par une bande adhésive (5) réalisée en particulier par pulvérisation à partir d'une masse thermofusible et d'un joint scellé (16) qui s'étendent dans la zone de chevauchement (4) parallèlement l'une à l'autre dans une direction longitudinale des bandes de film (2, 3) et sont disposées l'une à côté de l'autre.

2. Film d'emballage (1) selon la revendication 1, **caractérisé en ce que** le joint scellé (6) est un joint scellé (6) produit par application de chaleur et de pression sur les bandes de film (2, 3), en particulier un joint scellé (6) produit en appliquant successivement d'abord de la chaleur puis de la pression sur les bandes de film (4), de préférence un joint scellé produit en appliquant successivement de la chaleur, puis de la pression sur les bandes de film (2, 3) et ensuite en refroidissant les bandes de film (2, 3).

3. Film d'emballage (1) selon la revendication 1 ou 2, **caractérisé en ce que** le joint scellé (6) est un joint scellé (6) produit en appliquant des ondes ultrasonores et une pression sur les bandes de film (2, 3), en particulier un joint scellé (6) produit en appliquant simultanément des ondes ultrasonores et une pression sur les bandes de film (2, 3).

4. Film d'emballage (1) selon l'une des revendications précédentes, **caractérisé en ce que** le joint scellé (6) présente une distance maximale de 0,2 mm d'un bord adjacent (2b) d'une bande de film (2), s'étend de préférence jusqu'à un bord adjacent (2b) d'une bande de film (2) et/ou que le joint scellé (6) peut être pelable et/ou que la bande adhésive (5) a une distance de 1 cm à 4 cm, en particulier de 1,5 cm à 3 cm, de préférence de 1,8 cm à 2,2 cm d'un bord adjacent (3b) d'une bande de film (3).

5. Film d'emballage (1) selon l'une des revendications précédentes, **caractérisé en ce que** la bande adhésive (5) a une épaisseur de 20 µm à 100 µm, en particulier de 40 µm à 90 µm, de préférence de 75 µm à 85 µm et/ou que la bande adhésive (5) et/ou le joint scellé (6) a une largeur de 3 mm à 10 mm, en particulier de 4 mm à 7 mm, de préférence de 4,5 mm à 5,5 mm et/ou que la zone de chevauchement (4) a une largeur de 3 cm à 7 cm, en particulier de 3,5 cm à 6 cm, de préférence de 4 cm à 5 cm.

6. Un procédé de fabrication d'un film d'emballage (1), en particulier selon l'une quelconque des revendications précédentes, comprenant les étapes suivantes
- deux bandes de film monocouches ou multicouches (2, 3) sont prévues sur deux rouleaux d'alimentation de film (13, 14) disposés parallèlement l'un à l'autre,
- les bandes de film (2, 3) sont déroulées et guidées au moyen de rouleaux de guidage (15) de telle sorte qu'elles sont posées l'une sur l'autre dans leurs zones de bord intérieur (2a, 3a) orientées l'une á l'autre, formant une zone de chevauchement (4),
- les deux bandes de film (2, 3) sont réunies dans la zone de chevauchement (4),
**caractérisé en ce que** les deux bandes de film (2, 3) sont reliées ensemble dans la région de chevauchement (4) en
- applicant une bande adhésive (5) sur une zone de bord intérieur (2a) de l'une des bandes de film (2), en particulier la bande de film inférieure (2), en particulier pulvérisée, qui s'étend dans la direction longitudinale des bandes de film (2, 3),
- ensuite posant les zones de bord intérieur (2a, 3a) des deux bandes de film (2, 3) l'une sur l'autre pour former la zone de chevauchement (4) et pressant les bandes de film (2, 3) l'une sur l'autre dans la zone de chevauchement (4),
- ensuite produisant un joint scellé (6) s'étendant dans la direction longitudinale des bandes de film (2, 3) et orienté parallèlement à la bande adhésive (5), en particulier pelable, par application de chaleur et de pression ou par application d'ultrasons et de pression sur les bandes de film (2, 3) dans la zone de chevauchement (4).

7. Procédé selon la revendication 6, **caractérisé en ce que** les bandes de film interconnectées (2, 3) sont enroulées sur un rouleau d'enroulement, en particulier deux bandes de film d'insertion (7, 8) étant enroulées avec les bandes de film interconnectées (2, 3), dont l'une est positionnée à l'extérieur de la zone de chevauchement (4) sur l'une des bandes de film (2, 3).

8. Dispositif (9) pour produire un film d'emballage (1), en particulier selon l'une des revendications 1 à 5, comportant un dispositif de thermoscellage (19) qui comprend un cadre (10) sur lequel plusieurs rouleaux de guidage (15) sont maintenus en rotation, et une station de chauffage (22), une station de pressage (18) et une station de refroidissement (23), la station de chauffage (22) comprenant des moyens de chauffage, en particulier au moins deux barres de soudure (24), et deux bandes de Téflon fermées (25), dont chacune est posé sur plusieurs, de préférence sur quatre des rouleaux de guidage (15) et de préférence peut être mis en contact avec les moyens de chauffage, et la station de refroidissement (23) présentant des moyens de refroidissement, qui comprennent en particulier au moins deux barres de refroidissement (30) et au moins deux bandes de Téflon fermées (25), qui sont posées chacune sur plusieurs, de préférence sur quatre des rouleaux de guidage (15) et de préférence peuvent être mises en contact avec les moyens de refroidissement, ces rouleaux de guidage (15), autour de lequel les bandes de téflon (25) de la station de chauffage (22) sont posés, étant disposées de telle sorte qu'une partie de la première bande de Téflon (25) de la station de chauffage (22) et une partie de la deuxième bande de Téflon (25) de la station de chauffage (22) s'étendent parallèlement l'une à l'autre sur une distance de longueur prédéterminée, de sorte qu'une distance de chauffage (26) de longueur prédéterminée est définie entre les deux parties parallèles, et les rouleaux de guidage (15) autour desquels sont disposées les bandes de Téflon (25) de la station de refroidissement (23), étant disposées de telle sorte, qu'une partie de la première bande de Téflon (25) de la station de refroidissement (23) et une partie de la deuxième bande de Téflon (25) de la station de refroidissement (23) s'étendent parallèlement l'une à l'autre sur une distance de longueur prédéterminée de sorte qu'une distance de refroidissement (29) de longueur prédéterminée est définie entre les deux parties parallèles, et la station de pressage (18) comprenant deux rouleaux de pressage (20, 21) disposés parallèlement l'un à l'autre pour former une fente de pressage.

9. Dispositif (9) selon la revendication 8, **caractérisé en ce que** parmi les rouleaux de guidage (15) autour desquels une bande de Téflon (25) de la station de chauffage (22) est respectivement posée et/ou parmi les rouleaux de guidage (15) autour desquels une bande de Téflon (25) de la station de refroidissement (23) est respectivement posée, au moins un rouleau de guidage (15) peut être entraîné directement ou indirectement.

10. Dispositif (9) selon la revendication 8 ou 9, **caractérisé en ce que** le dispositif (9) comprend en outre deux rouleaux de déroulement (11, 12) maintenus parallèlement l'un à l'autre sur le cadre (10) et/ou sur un autre cadre (10), sur chacun desquels un rouleau d'alimentation en film (13, 14) avec une bande de film monocouche ou multicouche (2, 3) peut être maintenu de manière déroulable, et plusieurs autres rouleaux de guidage (15) maintenus sur le cadre (10) et/ou un autre cadre (10), qui sont formés et disposés pour guider au moins une bande de film (2, 3) à travers le dispositif (9), les rouleaux de déroulement (11, 12) et les autres rouleaux de guidage (15) étant disposés en particulier de telle sorte que deux bandes de film (2, 3) sont guidées parallèlement l'une par rapport à l' autre à travers le dispositif (9) et les deux bandes de film (2, 3) peuvent être posées l'une sur l'autre dans leurs zones de bord intérieur (2a, 3a) orientées l'une vers l'autre pour former une zone de chevauchement (4), et le dispositif de thermoscellage (19) étant disposé en aval des rouleaux de déroulement (11, 12).

11. Dispositif (9) selon l'une des revendications 8 à 10, **caractérisé en ce que** le dispositif (9) comprend en outre une station de collage (17) disposée de préférence entre les rouleaux de déroulement (11, 12) et le dispositif de thermoscellage (19), qui est formé pour appliquer, en particulier par pulvérisation, une bande adhésive (5) d'une masse thermofusible sur une bande de film (2) guidée à travers le dispositif (9), la station de collage (17) comprenant de préférence une tête de pulvérisation (17a) pour pulvériser une matière adhésive, qui est notamment mobile sur le cadre (10) ou sur l'autre cadre (10).

12. Dispositif (9) selon l'une des revendications 8 à 11, **caractérisé en ce que** le dispositif (9) comprend en outre une autre station de pressage (18) de préférence disposée entre la station de collage (17) et le dispositif de thermoscellage (19) avec deux rouleaux de pressage (20, 21) et/ou le dispositif (9) comprend en outre un dispositif de transport pour transporter au moins une bande de film (2, 3) à travers le dispositif (9), qui comprend, en particulier, des unités d'entraînement associées aux rouleaux de déroulement (11, 12) et/ou aux rouleaux de guidage (15), au moyen desquelles les rouleaux sont entraînés dans un sens de rotation prédéterminé.

13. Dispositif (9) selon l'une des revendications 8 à 12, **caractérisé en ce qu'**un rouleau d'enroulement est prévu en aval du dispositif de thermoscellage (19), qui est conçu et disposé de telle sorte qu'au moins une bande de film (2, 3) transportée par le dispositif (9) peut être enroulée sur celui-ci, et en particulier un autre rouleau de déroulement (31) pour recevoir un rouleau d'alimentation en film d'insertion (32), sur laquelle deux bandes de film d'insertion (7, 8) d'un film monocouche ou multicouche sont espacées axialement, l'autre rouleau de déroulement (31) étant disposé de telle sorte que des bandes de film d'insertion (7, 8) peuvent être enroulées sur le rouleau d'enroulement avec au moins une bande de film (2, 3) transportée par le dispositif (9).

14. Dispositif (9) selon l'une des revendications 8 à 13, **caractérisé en ce que** des moyens de guidage sont prévus pour guider extérieurement au moins une bande de film (2, 3) transportée à travers le dispositif (9) et/ou **que** les deux rouleaux de pressage (20, 21) de la station de pressage (18) et/ou de l'autre station de pressage (18) sont maintenus mobiles l'un par rapport à l'autre sur le cadre (10) ou l'autre cadre (10) pour régler une épaisseur de la fente de pressage.

15. Dispositif (9) selon l'une des revendications 8 à 14, **caractérisé en ce que** les rouleaux de déroulement (11, 12) et/ou les rouleaux de guidage (15) et/ou le rouleau d'enroulement et/ou l'autre rouleau de déroulement (31) peuvent être positionnés latéralement sur le cadre (10) ou l'autre cadre (10).

16. Dispositif (9) pour la fabrication d'un film d'emballage (1), notamment selon l'une des revendications 1 à 5, comprenant
- deux rouleaux de déroulement (11, 12) tenus parallèlement l'un à l'autre sur un cadre (10), sur chacun desquels un rouleau d'alimentation en film (13, 14) avec une bande de film monocouche ou multicouche (2, 3) peut être déroulé, et une pluralité de rouleaux de guidage (15) tenus sur le cadre (10), lesquels rouleaux de guidage sont conçus et agencés pour guider au moins une bande de film (2, 3) à travers le dispositif (9), les rouleaux de déroulement (11, 12) et les rouleaux de guidage (15) étant notamment disposés de telle sorte que deux bandes de film (2, 3) sont guidées parallèlement l'une à l'autre à travers le dispositif (9) et les deux bandes de film (2, 3) peuvent être posées l'une sur l'autre dans leurs zones de bord intérieur (2a, 3a) orientées l'une vers l'autre, formant une zone de chevauchement (4),
- une station de collage (17) disposée en aval des rouleaux de déroulement, qui est conçue pour appliquer, en particulier pour pulvériser, une bande adhésive (5) d'une masse thermofusible sur une bande de film (2) guidée à travers le dispositif (9), la station de collage (17) comprenant de préférence une tête de pulvérisation (17a) pour pulvériser sur un matériau adhésif, qui est maintenue en particulier de manière mobile sur le cadre (10),
- une station de pressage (18) disposée en aval de la station de collage avec deux rouleaux de pressage (20, 21) disposés parallèlement l'un à l'autre pour former une fente de pressage, et
- un dispositif de scellement par ultrasons en aval de la station de pressage (18), qui comprend de préférence au moins une sonde ultrasonore en forme de rouleau monté de manière rotative et un rouleau de pressage également monté de manière rotative, qui sont disposés parallèlement l'un à l'autre pour former une fente de pressage.
